# EUROPEAN PATENT APPLICATION

(11) **EP 4 776 687 A1**
(43) Date of publication of application: **15.07.2026**
(21) Application number: 24870940.4
(22) Date of filing: 27.09.2024
(51) Int. Cl.: H04W 36/00

(54) **COMMUNICATION METHOD AND COMMUNICATION APPARATUS**

(30) Priority: 27.09.2023 CN 202311266612
(71) Applicant: HUAWEI TECHNOLOGIES CO., LTD., Shenzhen 518129 (CN)
(72) Inventor: ZHANG, Jingwei, Shenzhen, Guangdong 518129 (CN); CHEN, Ying, Shenzhen, Guangdong 518129 (CN); QIAO, Yunfei, Shenzhen, Guangdong 518129 (CN); ZHANG, Jiayin, Shenzhen, Guangdong 518129 (CN); YANG, Ruonan, Shenzhen, Guangdong 518129 (CN)
(74) Representative: MERH-IP Matias Erny Reichl Hoffmann Patentanwälte PartG mbB
(86) International application number: PCT/CN2024/121665
(87) International publication number: WO 2025/067402

(57) **Abstract**

This application provides a communication method and a communication apparatus. The communication method includes: Before a terminal device performs handover, a network device indicates resource sets corresponding to a plurality of candidate cells to the terminal device, so that the terminal device communicates with the network device after the terminal device performs handover to a target cell. This method can avoid signaling overheads caused by frequent indication of resource sets. Especially in a continuous handover scenario, for example, in an NTN scenario, a satellite moves fast, and the terminal device performs handover frequently. Therefore, the terminal device needs higher handover efficiency. After the network device configures the resource sets of the plurality of cells in advance, frequent signaling transmission is not required, so that handover efficiency can be improved.

## Description

This application claims priority to Chinese Patent Application No. 202311266612.0, filed with the China National Intellectual Property Administration on September 27, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A satellite network is a hot research topic in the world today. A satellite communication technology has been increasingly mature. For example, a non-terrestrial network (non-terrestrial network, NTN) is a network or a network segment that implements communication by using a radio frequency on a satellite, and can provide wider coverage. In addition, a satellite base station is not vulnerable to a natural disaster or external force.

In a current new radio (new radio, NR) protocol, beam information may be indicated by using a quasi co-location (quasi co-location, QCL) relationship between antenna ports. The QCL relationship indicates that beams corresponding to a plurality of antenna ports have one or more same or similar spatial characteristics. QCL information of a physical downlink shared channel (physical downlink shared channel, PDSCH) may be configured by a transmission configuration indicator (transmission configuration indicator, TCI). Specifically, a TCI-state (state) may indicate a reference signal that has a QCL relationship with a demodulation reference signal (demodulation reference signal, DMRS) of the PDSCH.

In an existing terrestrial network, when UE performs handover, a network side needs to deliver media access control control element (media access control element, MAC CE) signaling to a terminal device (user equipment, UE), to indicate a resource set that needs to be activated at the UE, for example, a TCI state. The terminal device may determine, based on the TCI state, a beam for receiving a physical downlink shared channel (physical downlink shared channel, PDSCH). However, in an NTN scenario, because a satellite moves fast and handover is frequently performed, frequently delivering a TCI state that needs to be activated causes high signaling overheads, resulting in poor flexibility.

In the NTN scenario, a communication method is urgently needed, to reduce signaling overheads caused by indicating a resource set in a frequent handover process of UE, thereby improving handover efficiency.

### SUMMARY

This application provides a communication method and a communication apparatus, to reduce signaling overheads caused by indicating a resource set in a frequent handover process of UE, thereby improving handover efficiency.

According to a first aspect, a communication method is provided. The method may be performed by a network device, or may be performed by a chip or a circuit configured in a network device. This is not limited in this application.

The method includes: determining first configuration information, where the first configuration information indicates a resource set corresponding to each cell in a plurality of cells, and the plurality of cells are a plurality of cells to which a terminal device is to perform handover; and sending the first configuration information.

In this application, the first configuration information indicates a plurality of resource sets, the plurality of resource sets are in a one-to-one correspondence with the plurality of cells, and the plurality of cells are a plurality of cells to which the terminal device is to perform handover.

The plurality of resource sets are in a one-to-one correspondence with the plurality of cells. It may be understood that each resource set in the plurality of resource sets is used by the UE to communicate with the network device in a corresponding cell.

It may be understood that, the resource set may be determined by the network device based on information such as a moving track of a satellite, a moving status of the UE, and a cell range within satellite coverage.

Based on the foregoing technical solution, before the terminal device performs handover, the network device may indicate the resource sets corresponding to the plurality of candidate cells to the terminal device, so that the terminal device communicates with the network device after the terminal device performs handover to a target cell. It may be understood that, in the method, the network device does not need to send signaling to the terminal device to indicate the resource set each time the terminal device performs cell handover. A simpler manner is to configure, for the terminal device at a time before the terminal device performs handover, resource sets corresponding to a plurality of cells to which the terminal device is to perform handover. This method can avoid signaling overheads caused by frequent indication of resource sets. Especially in a continuous handover scenario, for example, in an NTN scenario, the satellite moves fast, and the terminal device performs handover frequently. Therefore, the terminal device needs higher handover efficiency. After the network device configures the resource sets of the plurality of cells in advance, frequent signaling transmission is not required, so that handover efficiency can be improved.

With reference to the first aspect, in some implementations of the first aspect, the resource set corresponding to each cell indicates a reference signal resource and/or a bandwidth used when the network device communicates with each cell.

In the foregoing technical solution, the resource set may indicate the reference signal resource or the bandwidth information used when the terminal device performs communication in a corresponding cell. It may be understood that both the reference signal resource and the bandwidth information may be used for communication between the terminal device and the network device, and the resource set may further include other resource information used for communication between the terminal device and the network device. This is not limited in this application.

With reference to the first aspect, in some implementations of the first aspect, the resource set corresponding to each cell includes one transmission configuration indicator state TCI state set and/or one bandwidth part (bandwidth part, BWP) set, the TCI state set includes at least one TCI state, and the BWP set includes at least one BWP.

It may be understood that the TCI state is used as an example of a reference signal resource, and the BWP is used as an example of bandwidth information.

When performing candidate cell handover, the UE needs to activate one or more corresponding TCI states. The one or more TCI states may be referred to as a TCI state set, or may be referred to as a TCI state list (list), or may be indicated by using another term name that identifies the one or more TCI states. In this embodiment of this application, the TCI state set is used for description, but this is not limited.

Similarly, when performing candidate cell handover, the UE may perform communication based on one or more corresponding BWPs, and may determine a corresponding TCI state set. The one or more BWPs may be referred to as a BWP set, or may be referred to as a BWP list (list), or may be indicated by using another term name that identifies the one or more BWPs. In this embodiment of this application, the BWP set is used for description, but this is not limited.

In the foregoing technical solution, specific indication content of the resource set may be flexibly configured. For example, the resource set may indicate a TCI state corresponding to a cell, or may indicate a BWP corresponding to a cell, or may indicate both a TCI state and a BWP, so that the terminal device selects a corresponding configuration based on an actual requirement for communication, thereby improving flexibility of configuration information.

With reference to the first aspect, in some implementations of the first aspect, first indication information is sent, where the first indication information indicates a first resource set, the first resource set corresponds to a first cell, and the first cell is one of the plurality of cells.

In the foregoing technical solution, the network device indicates, to the terminal device by using the first indication information, the first resource set corresponding to the first cell, so that the terminal device performs communication by using the first resource set when performing handover to the first cell.

With reference to the first aspect, in some implementations of the first aspect, the first indication information includes an index of the first resource set.

In the foregoing technical solution, the plurality of resource sets included in the first configuration information correspond to different indexes, and the network device may indicate, to the terminal device by using the indexes corresponding to the resource sets, the resource set corresponding to the first cell.

With reference to the first aspect, in some implementations of the first aspect, the first indication information includes an index of a first TCI state set, and the first TCI state set corresponds to the first resource set; or the first indication information includes an index of a first BWP set, and the first BWP set corresponds to the first resource set; or the first indication information includes an index of a first beam, the first beam corresponds to the first resource set, and the first beam is used to perform uplink communication and/or downlink communication in the first cell.

In the foregoing technical solution, content of the resource set may be configured as a TCI state set. In this case, the first resource set may include the first TCI state set. The index of the first TCI state set is indicated, so that the terminal device can perform handover to the first cell (the target cell) and activate a TCI state in the first TCI state set. Content of the resource set may be configured as a BWP set. In this case, the first resource set may include the first BWP set. The index of the first BWP set is indicated, so that the terminal device can perform handover to the first cell (the target cell) and activate a TCI state in the first TCI state set corresponding to the first BWP set. Each resource set may alternatively include an indication of a beam, and the indication of the beam indicates a beam that performs uplink communication and/or downlink communication in a cell corresponding to the resource set.

With reference to the first aspect, in some implementations of the first aspect, a sequence in which the terminal device performs handover to the plurality of cells is determined; and a sequence of the plurality of resource sets respectively corresponding to the plurality of cells is determined based on the handover sequence of the plurality of cells, where the sequence of the plurality of resource sets is in a one-to-one correspondence with the handover sequence of the plurality of cells.

In the foregoing technical solution, the terminal device may perform continuous cell handover, that is, perform handover to a plurality of cells based on a particular sequence, and the network device may determine the sequence of the plurality of corresponding resource sets based on the handover sequence of the plurality of cells.

With reference to the first aspect, in some implementations of the first aspect, the plurality of resource sets include the first resource set, and the first resource set is a next resource set that is of a resource set corresponding to a current cell and that is in the plurality of resource sets.

In the foregoing technical solution, when the terminal device performs continuous cell handover, the first resource set indicated by the first indication information may be the next resource set of the resource set corresponding to the current cell. That is, the first indication information indicates to determine the first resource set based on the cell handover sequence. In other words, the first resource set indicated by the first indication information is determined based on the cell handover sequence.

With reference to the first aspect, in some implementations of the first aspect, the first indication information is 1-bit information.

In the foregoing technical solution, when the terminal device performs continuous cell handover, the network device may use the 1-bit information to indicate a resource set corresponding to a next cell to which the terminal device is to perform handover, so that signaling overheads can be reduced.

With reference to the first aspect, in some implementations of the first aspect, the first indication information further indicates the terminal device to perform handover to the first cell.

In the foregoing technical solution, the network device indicates, to the terminal device, the resource set corresponding to the next cell to which the terminal device is to perform handover, and may trigger cell handover at the same time. In other words, the network device may indicate, in existing handover signaling, the resource set corresponding to the next cell to which the terminal device is to perform handover, so that signaling procedures can be reduced, and handover time can be reduced.

With reference to the first aspect, in some implementations of the first aspect, at least one piece of first information is sent, where each piece of first information in the at least one piece of first information indicates a handover condition of one cell in the plurality of cells.

The first information may be handover condition information of the terminal device, for example, a handover time period/location information/depression and elevation angles/remaining service time and corresponding threshold information.

Based on the technical solution, when configuring, in advance, resource sets for the UE to perform conditional handover for N successive times, the access network device configures, for the UE, information such as a corresponding handover time period/location information/depression and elevation angles/remaining service time and a threshold corresponding to the handover condition together with the resource sets, so that the UE performs handover to the target cell by using the handover condition to activate a corresponding resource set, to avoid signaling overheads caused by frequent indication of a resource set in a conditional handover scenario, thereby improving handover efficiency.

With reference to the first aspect, in some implementations of the first aspect, the at least one piece of first information is included in the first configuration information.

According to a second aspect, a communication method is provided. The method may be performed by a terminal device, or may be performed by a chip or a circuit configured in a terminal device. This is not limited in this application.

The method includes: receiving first configuration information; and determining, based on the first configuration information, a resource set corresponding to each cell in a plurality of cells, where the plurality of cells are a plurality of cells to which the terminal device is to perform handover.

In this application, for the first configuration information and the resource set, refer to the description in the first aspect. Details are not described again.

In the foregoing technical solution, before performing handover, the terminal device may receive, from the network device, an indication of the resource sets corresponding to the plurality of candidate cells, and after performing handover to a target cell, the terminal device communicates with the network device based on the plurality of resource sets indicated by the network device. It may be understood that, in the method, the terminal device does not need to receive indication information signaling from the network device to determine the resource set during each cell handover. A simpler manner is to receive, by the terminal device at a time before the terminal device performs handover, resource sets corresponding to a plurality of cells to which the terminal device is to perform handover that are configured by the network device. This method can avoid signaling overheads caused by frequent indication of resource sets. Especially in a continuous handover scenario, for example, in an NTN scenario, the satellite moves fast, and the terminal device performs handover frequently. Therefore, the terminal device needs higher handover efficiency. After the network device configures the resource sets of the plurality of cells in advance, frequent signaling transmission is not required, so that handover efficiency can be improved.

With reference to the second aspect, in some implementations of the second aspect, the resource set corresponding to each cell indicates a reference signal resource and a bandwidth used when a network device communicates with each cell.

In the foregoing technical solution, the resource set may indicate the reference signal resource or the bandwidth information used when the terminal device performs communication in a corresponding cell. It may be understood that both the reference signal resource and the bandwidth information may be used for communication between the terminal device and the network device, and the resource set may further include other resource information used for communication between the terminal device and the network device. This is not limited in this application.

With reference to the second aspect, in some implementations of the second aspect, the resource set corresponding to each cell includes one transmission configuration indicator state TCI state set and/or one bandwidth part BWP set, the TCI state set includes at least one TCI state, and the BWP set includes at least one BWP.

In this application, for the TCI state and the BWP, refer to the description in the first aspect. Details are not described again.

In the foregoing technical solution, specific content of the resource set may be flexibly configured. For example, the resource set may indicate a TCI state corresponding to a cell, or may indicate a BWP corresponding to a cell, or may indicate both a TCI state and a BWP, so that the terminal device selects a corresponding configuration based on an actual requirement for communication, thereby improving flexibility of configuration information.

With reference to the second aspect, in some implementations of the second aspect, first indication information is received; and a first resource set is determined based on the first indication information, where the first resource set corresponds to a first cell, and the first cell is one of the plurality of cells.

In the foregoing technical solution, the terminal device determines, based on the first indication information sent by the network device, the first resource set corresponding to the first cell, so that the terminal device performs communication by using the first resource set when performing handover to the first cell.

With reference to the second aspect, in some implementations of the second aspect, the first indication information includes an index of the first resource set.

In the foregoing technical solution, the plurality of resource sets included in the first configuration information correspond to different indexes, and the terminal device determines the index of the first resource set based on the first indication information sent by the network device, to determine the resource set corresponding to the first cell.

With reference to the second aspect, in some implementations of the second aspect, the first indication information includes an index of a first TCI state set, and the first TCI state set corresponds to the first resource set; or the first indication information includes an index of a first BWP set, and the first BWP set corresponds to the first resource set; or the first indication information includes an index of a first beam, the first beam corresponds to the first resource set, and the first beam is used to perform uplink communication and/or downlink communication in the first cell.

In the foregoing technical solution, content of the resource set may be configured as a TCI state set. In this case, the first resource set may include the first TCI state set. The index of the first TCI state set is indicated, so that the terminal device can perform handover to the first cell (the target cell) and activate a TCI state in the first TCI state set. Content of the resource set may be configured as a BWP set. In this case, the first resource set may include the first BWP set. The index of the first BWP set is indicated, so that the terminal device can perform handover to the first cell (the target cell) and activate a TCI state in the first TCI state set corresponding to the first BWP set. Each resource set may include an indication of a beam, and the indication of the beam indicates a beam that performs uplink communication and/or downlink communication in a cell corresponding to the resource set.

With reference to the second aspect, in some implementations of the second aspect, the first resource set is a next resource set that is of a resource set corresponding to a current cell and that is in the plurality of resource sets.

In the foregoing technical solution, the terminal device may perform continuous cell handover, that is, perform handover to a plurality of cells based on a particular sequence. The first resource set indicated by the first indication information sent by the network device may be the next resource set of the resource set corresponding to the current cell. That is, the first indication information indicates to determine the first resource set based on the cell handover sequence. In other words, the first resource set indicated by the first indication information is determined based on the cell handover sequence, and the terminal device may determine the first resource set based on the next cell of the current cell.

With reference to the second aspect, in some implementations of the second aspect, the first indication information is 1-bit information.

In the foregoing technical solution, when the terminal device performs continuous cell handover, the network device may use the 1-bit information to indicate a resource set corresponding to a next cell to which the terminal device is to perform handover, so that signaling overheads can be reduced.

With reference to the second aspect, in some implementations of the second aspect, the terminal device performs handover to the first cell based on the first indication information.

In the foregoing technical solution, the first indication information received by the terminal device not only indicates the resource set corresponding to the next cell to which the terminal device is to perform handover, but also indicates to trigger cell handover. In other words, the first indication information may be carried in existing handover signaling and further indicates the resource set corresponding to the next cell to which the terminal device is to perform handover. The terminal device performs cell handover based on the first indication information and determines the corresponding resource set, so that signaling procedures can be reduced, and handover time can be reduced.

With reference to the second aspect, in some implementations of the second aspect, at least one piece of first information is received, where each piece of first information in the at least one piece of first information indicates a handover condition of one cell in the plurality of cells.

In the foregoing technical solution, when configuring, in advance, resource sets for the UE to perform conditional handover for N successive times, the access network device configures, for the UE, information such as a corresponding handover time period/location information/depression and elevation angles/remaining service time and a threshold corresponding to the handover condition together with the resource sets, so that the UE performs handover to the target cell by using the handover condition to activate a corresponding resource set, to avoid signaling overheads caused by frequent indication of a resource set in a conditional handover scenario, thereby improving handover efficiency.

With reference to the second aspect, in some implementations of the second aspect, the at least one piece of first information is included in the first configuration information.

According to a third aspect, a communication apparatus is provided. The apparatus may be a network device, or may be a chip or a circuit configured in a network device. This is not limited in this application.

The apparatus includes: a processing unit, configured to determine first configuration information, where the first configuration information indicates a resource set corresponding to each cell in a plurality of cells, and the plurality of cells are a plurality of cells to which a terminal device is to perform handover; and a transceiver unit, configured to send the first configuration information.

In this application, for the first configuration information and the resource set, refer to the description in the first aspect. Details are not described again.

Based on the foregoing technical solution, before the terminal device performs handover, the network device may indicate the resource sets corresponding to the plurality of candidate cells to the terminal device, so that the terminal device communicates with the network device after the terminal device performs handover to a target cell. It may be understood that, in the method, the network device does not need to send signaling to the terminal device to indicate the resource set each time the terminal device performs cell handover. A simpler manner is to configure, for the terminal device at a time before the terminal device performs handover, resource sets corresponding to a plurality of cells to which the terminal device is to perform handover. This method can avoid signaling overheads caused by frequent indication of resource sets. Especially in a continuous handover scenario, for example, in an NTN scenario, the satellite moves fast, and the terminal device performs handover frequently. Therefore, the terminal device needs higher handover efficiency. After the network device configures the resource sets of the plurality of cells in advance, frequent signaling transmission is not required, so that handover efficiency can be improved.

With reference to the third aspect, in some implementations of the third aspect, the resource set corresponding to each cell indicates a reference signal resource and/or a bandwidth used when the network device communicates with each cell.

With reference to the third aspect, in some implementations of the third aspect, the resource set corresponding to each cell includes one transmission configuration indicator state TCI state set and/or one bandwidth part BWP set, the TCI state set includes at least one TCI state, and the BWP set includes at least one BWP.

With reference to the third aspect, in some implementations of the third aspect, the sending unit is further configured to send first indication information, where the first indication information indicates a first resource set, the first resource set corresponds to a first cell, and the first cell is one of the plurality of cells.

With reference to the third aspect, in some implementations of the third aspect, the first indication information includes an index of the first resource set.

With reference to the third aspect, in some implementations of the third aspect, the first indication information includes an index of a first TCI state set, and the first TCI state set corresponds to the first resource set; or the first indication information includes an index of a first BWP set, and the first BWP set corresponds to the first resource set; or the first indication information includes an index of a first beam, the first beam corresponds to the first resource set, and the first beam is used to perform uplink communication and/or downlink communication in the first cell.

With reference to the third aspect, in some implementations of the third aspect, the processing unit is further configured to determine a sequence in which the terminal device performs handover to the plurality of cells; and the processing unit is further configured to determine, based on the handover sequence of the plurality of cells, a sequence of the plurality of resource sets respectively corresponding to the plurality of cells, where the sequence of the plurality of resource sets is in a one-to-one correspondence with the handover sequence of the plurality of cells.

With reference to the third aspect, in some implementations of the third aspect, the plurality of resource sets include the first resource set, and the first resource set is a next resource set that is of a resource set corresponding to a current cell and that is in the plurality of resource sets.

With reference to the third aspect, in some implementations of the third aspect, the first indication information is 1-bit information.

With reference to the third aspect, in some implementations of the third aspect, the first indication information further indicates the terminal device to perform handover to the first cell.

With reference to the third aspect, in some implementations of the third aspect, the transceiver unit is further configured to send at least one piece of first information, where each piece of first information in the at least one piece of first information indicates a handover condition of one cell in the plurality of cells.

With reference to the third aspect, in some implementations of the third aspect, the at least one piece of first information is included in the first configuration information.

According to a fourth aspect, a communication apparatus is provided. The apparatus may be a terminal device, or may be a chip or a circuit configured in a terminal device. This is not limited in this application.

The apparatus includes: a transceiver unit, configured to receive first configuration information; and a processing unit, configured to determine, based on the first configuration information, a resource set corresponding to each cell in a plurality of cells, where the plurality of cells are a plurality of cells to which a terminal device is to perform handover.

In this application, for the first configuration information and the resource set, refer to the description in the first aspect. Details are not described again.

In the foregoing technical solution, before performing handover, the terminal device may receive, from the network device, an indication of the resource sets corresponding to the plurality of candidate cells, and after performing handover to a target cell, the terminal device communicates with the network device based on the plurality of resource sets indicated by the network device. It may be understood that, in the method, the terminal device does not need to receive indication information signaling from the network device to determine the resource set during each cell handover. A simpler manner is to receive, by the terminal device at a time before the terminal device performs handover, resource sets corresponding to a plurality of cells to which the terminal device is to perform handover that are configured by the network device. This method can avoid signaling overheads caused by frequent indication of resource sets. Especially in a continuous handover scenario, for example, in an NTN scenario, the satellite moves fast, and the terminal device performs handover frequently. Therefore, the terminal device needs higher handover efficiency. After the network device configures the resource sets of the plurality of cells in advance, frequent signaling transmission is not required, so that handover efficiency can be improved.

With reference to the fourth aspect, in some implementations of the fourth aspect, the resource set corresponding to each cell indicates a reference signal resource and a bandwidth used when a network device communicates with each cell.

With reference to the fourth aspect, in some implementations of the fourth aspect, the resource set corresponding to each cell includes one transmission configuration indicator state TCI state set and/or one bandwidth part BWP set, the TCI state set includes at least one TCI state, and the BWP set includes at least one BWP.

With reference to the fourth aspect, in some implementations of the fourth aspect, the transceiver unit is further configured to receive first indication information; and the processing unit is further configured to determine a first resource set based on the first indication information, where the first resource set corresponds to a first cell, and the first cell is one of the plurality of cells.

With reference to the fourth aspect, in some implementations of the fourth aspect, the first indication information includes an index of the first resource set.

With reference to the fourth aspect, in some implementations of the fourth aspect, the first indication information includes an index of a first TCI state set, and the first TCI state set corresponds to the first resource set; or the first indication information includes an index of a first BWP set, and the first BWP set corresponds to the first resource set; or the first indication information includes an index of a first beam, the first beam corresponds to the first resource set, and the first beam is used to perform uplink communication and/or downlink communication in the first cell.

With reference to the fourth aspect, in some implementations of the fourth aspect, the first resource set is a next resource set that is of a resource set corresponding to a current cell and that is in the plurality of resource sets.

With reference to the fourth aspect, in some implementations of the fourth aspect, the first indication information is 1-bit information.

With reference to the fourth aspect, in some implementations of the fourth aspect, the processing unit is further configured to perform handover to the first cell based on the first indication information.

With reference to the fourth aspect, in some implementations of the fourth aspect, the transceiver unit is further configured to receive at least one piece of first information, where each piece of first information in the at least one piece of first information indicates a handover condition of one cell in the plurality of cells.

With reference to the fourth aspect, in some implementations of the fourth aspect, the at least one piece of first information is included in the first configuration information.

According to a fifth aspect, a communication apparatus is provided. The apparatus is configured to perform the method provided in the first aspect or the second aspect. Specifically, the communication apparatus may include units and/or modules configured to perform the method according to any one of the implementations of the first aspect or the second aspect, for example, a processing unit and/or a communication unit.

In an implementation, the communication apparatus includes the communication unit and the processing unit. The communication unit may be a transceiver or an input/output interface. The processing unit may be at least one processor. Optionally, the transceiver may be a transceiver circuit. Optionally, the input/output interface may be an input/output circuit.

In another implementation, the communication apparatus is a chip, a chip system, or a circuit in a network device. When the communication apparatus is the chip, the chip system, or the circuit in the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixth aspect, a communication apparatus is provided. The communication apparatus includes a processor, and optionally, further includes a memory. The processor is configured to control a transceiver to receive and send a signal, the memory is configured to store a computer program, and the processor is configured to: invoke the computer program from the memory and run the computer program, so that the communication apparatus performs the method according to any one of the possible implementations of the first aspect or the second aspect.

Optionally, there are one or more processors, and there are one or more memories.

Optionally, the memory may be integrated with the processor, or the memory and the processor are disposed separately.

Optionally, the network device further includes a transceiver. The transceiver may be specifically a transmitting machine (transmitter) and a receiving machine (receiver).

According to a seventh aspect, a computer-readable storage medium is provided. The computer-readable storage medium stores a computer program or code. When the computer program or code is run on a computer, the computer is enabled to perform the method according to any one of the possible implementations of the first aspect or the second aspect.

According to an eighth aspect, a chip is provided, including at least one processor. The at least one processor is coupled to a memory. The memory is configured to store a computer program. The processor is configured to: invoke the computer program from the memory and run the computer program, so that a sending device on which the chip system is installed performs the method according to any one of the possible implementations of the first aspect or the second aspect.

The chip may include an input circuit or interface configured to send information or data and an output circuit or interface configured to receive information or data.

According to a ninth aspect, a computer program product is provided. The computer program product includes computer program code. When the computer program code is run by a sending device, the method according to any one of the possible implementations of the first aspect or the second aspect is performed.

For beneficial effects of the third aspect to the ninth aspect, refer to the beneficial effects of the first aspect and the second aspect. Details are not described again.

### BRIEF DESCRIPTION OF DRAWINGS

FIG. 1 is a diagram of an architecture 100 of a communication system to which an embodiment of this application is applicable;
FIG. 2 is a diagram of an architecture 200 of a communication system to which an embodiment of this application is applicable;
FIG. 3 is a diagram of an architecture 300 of a communication system to which an embodiment of this application is applicable;
FIG. 4 is a diagram of an architecture 400 of a communication system to which an embodiment of this application is applicable;
FIG. 5 is a diagram of an architecture 500 of a communication system to which an embodiment of this application is applicable;
FIG. 6 is a schematic flowchart of a communication method to which an embodiment of this application is applicable;
FIG. 7 is a schematic flowchart of a communication method to which an embodiment of this application is applicable;
FIG. 8 is a schematic flowchart of a communication method to which an embodiment of this application is applicable;
FIG. 9 is a block diagram of a structure of a communication apparatus to which an embodiment of this application is applicable; and
FIG. 10 is a block diagram of a structure of a communication apparatus to which an embodiment of this application is applicable.

### DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an Internet of Things (Internet of Things, IoT) communication system, or another communication system.

In embodiments of this application, a network device is an access device that is used by a terminal device to access a mobile communication system in a wireless manner, for example, includes an access network (access network, AN) device, for example, a base station. The network device may alternatively be a device that communicates with the terminal device through an air interface. The network device may include an evolved NodeB (evolved NodeB) (also referred to as an eNB or an e-NodeB for short) in an LTE system or a long term evolution-advanced (long term evolution-advanced, LTE-A) system. The network device may alternatively include a next generation NodeB (next generation NodeB, gNB) in a 5G NR system. The network device may alternatively include an access node or the like in a wireless-fidelity (wireless-fidelity, Wi-Fi) system. The network device may alternatively be a relay station, an in-vehicle device, a future evolved public land mobile network (Public Land Mobile Network, PLMN) device, a device in a D2D network, a device in a machine-to-machine (machine-to-machine, M2M) network, a device in an Internet of Things (Internet of Things, IoT) network, a network device in a PLMN network, or the like. A specific technology and a specific device form that are used by the network device are not limited in embodiments of this application.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such protocol layer division is merely an example, and division may alternatively be performed at another protocol layer. A radio frequency apparatus may be remotely disposed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). In the network architecture, signaling generated by the CU may be sent to the terminal device through the DU, or signaling generated by the UE may be sent to the CU through the DU. The DU may directly transparently transmit the signaling to the UE or the CU through protocol layer encapsulation without parsing the signaling. In the network architecture, the CU is classified as a network device on a radio access network (radio access network, RAN) side. In addition, the CU may alternatively be classified as a network device on a core network (core network, CN) side. This is not limited in this application.

Alternatively, the access network device may be a server or the like. For example, a network device in a vehicle-to-everything (vehicle-to-everything, V2X) technology may be a roadside unit (roadside unit, RSU). The following is described by using an example in which the access network device is a base station. The base station may communicate with the terminal device, or may communicate with the terminal device via a relay station. The terminal device may communicate with a plurality of base stations in different access technologies.

In embodiments of this application, a core network device is configured to implement functions such as mobility management, data processing, session management, and policy and charging. Names of devices that implement functions of a core network in systems using the different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, the terminal device is a device having a wireless transceiver function, and may send a signal to the network device, or receive a signal from the network device. The terminal device may include user equipment (user equipment, UE), and is sometimes referred to as a terminal, an access station, a UE station, a remote station, a wireless communication device, a user apparatus, or the like. The terminal device is configured to connect a person, an object, a machine, and the like, may be widely used in various scenarios, and includes, for example but not limited to, terminal devices in the following scenarios: cellular communication, D2D, V2X, machine-to-machine/machine type communication (machine-to-machine/machine type communication, M2M/MTC), Internet of Things (Internet of Things, IoT), virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, a smart city (smart city), an unmanned aerial vehicle, and a robot. For example, the terminal device may be a mobile phone (mobile phone), a pad (Pad), a computer with a wireless transceiver function, a VR terminal, an AR terminal, a wireless terminal in industrial control, a wireless terminal in self-driving, a smart speaker in an IoT network, a wireless terminal device in remote medical, a wireless terminal device in a smart grid, a wireless terminal device in transportation security, a wireless terminal device in a smart city, or a wireless terminal device in a smart home. By way of example instead of limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. If the various terminal devices described above are located in a vehicle (for example, placed in the vehicle or installed in the vehicle), the terminal devices may be all considered as in-vehicle terminal devices. For example, the in-vehicle terminal devices are also referred to as on-board units (on-board unit, OBU). The terminal device in this application may alternatively be a vehicle-mounted module, a vehicle-mounted assembly, a vehicle-mounted component, a vehicle-mounted chip, or an on-board unit that is built in a vehicle as one or more components or units. The vehicle may implement the method of this application by using the built-in vehicle-mounted module, vehicle-mounted module, vehicle-mounted component, vehicle-mounted chip, or on-board unit.

In embodiments of this application, a communication apparatus configured to implement a function of a network device may be a network device, or may be an apparatus that can support the network device in implementing the function, for example, a chip system. The apparatus may be mounted in the network device. In the technical solutions provided in embodiments of this application, the technical solutions provided in embodiments of this application are described by using an example in which the apparatus configured to implement the function of the network device is a network device.

The technical solutions provided in embodiments of this application may be applied to a 4th generation (the 4th generation, 4G) mobile communication technology system, a 5G system, an NTN system, vehicle-to-everything (vehicle-to-everything, V2X) communication, long term evolution-vehicle (LTE-vehicle, LTE-V) communication, vehicle-to-vehicle (vehicle-to-vehicle, V2V) communication, Internet of Vehicles communication, machine type communication (Machine Type Communication, MTC), Internet of Things (Internet of Things, IoT) communication, long term evolution-machine-to-machine (LTE-machine to machine, LTE-M) communication, machine-to-machine (machine-to-machine, M2M) communication, or a future mobile communication system.

In a possible application scenario, the NTN system may include a satellite system. Based on an altitude of a satellite, namely, an orbital altitude of the satellite, the satellite system may be classified into a highly elliptical orbit (highly elliptical orbit, HEO) satellite, a geostationary earth orbit (geostationary earth orbit, GEO) satellite, a medium earth orbit (medium earth orbit, MEO) satellite, or a low-earth orbit (low-earth orbit, LEO) satellite. In addition, the NTN system may further include an aerial network device, for example, a high altitude platform station (high altitude platform station, HAPS) communication system. The aerial network device in this application is not limited to the foregoing examples.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

A communication system applicable to this application is first briefly described below.

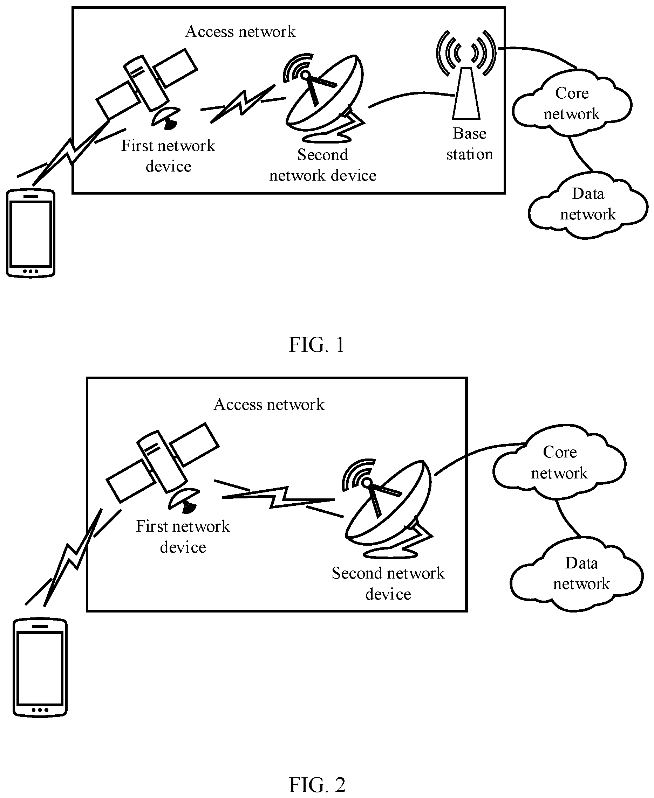

FIG. 1 is a diagram of an architecture 100 of an NTN communication system to which an embodiment of this application is applicable.

The NTN network includes a first network device, a second network device, a terrestrial access network device, a terrestrial core network, and a terminal. The first network device may be a satellite, for example, may be an HEO satellite, a GEO satellite, an MEO satellite, an LEO satellite, or an HAPS. This is not limited herein. The second network device may be a gateway (or referred to as a terrestrial station, an earth station, or a gateway station) (gateway), and may be configured to connect the first network device to a base station. One or more first network devices may be connected to one or more terrestrial base stations through one or more second network devices. This is not limited herein. In FIG. 1, a communication mode of the first network device is a transparent (transparent) mode. To be specific, the first network device serves as an analog radio frequency repeater to implement radio frequency conversion and amplification, and may transparently transmit or copy a signal between the base station and the terminal. For example, a signal sent by the terminal may be transparently transmitted by the first network device, and forwarded by the second network device, to the terrestrial base station.

The communication mode of the first network device is not limited in this embodiment of this application. For example, the communication mode of the first network device may alternatively be a regenerative (regenerative) mode.

FIG. 2 is a diagram of an architecture 200 of an NTN communication system to which an embodiment of this application is applicable. In FIG. 2, a communication mode of a first network device is a regenerative mode. To be specific, the first network device may serve as a base station for wireless communication to regenerate signals received from the ground, and may understand and process these signals. For example, the first network device may be a base station carried on an artificial earth satellite or a high-altitude aircraft. For example, the base station may be an evolved NodeB (eNB) or a 5G base station (gNB). A second network device may forward signaling between the first network device (that is, the base station) and a core network.

It should be noted that FIG. 2 shows only one first network device and one second network device. In actual use, an architecture with a plurality of first network devices and/or a plurality of second network devices may be used based on a requirement. Each first network device may provide a service for one or more terminals, each second network device may correspond to one or more first network devices, and each first network device may correspond to one or more second network devices. This is not specifically limited in this embodiment of this application.

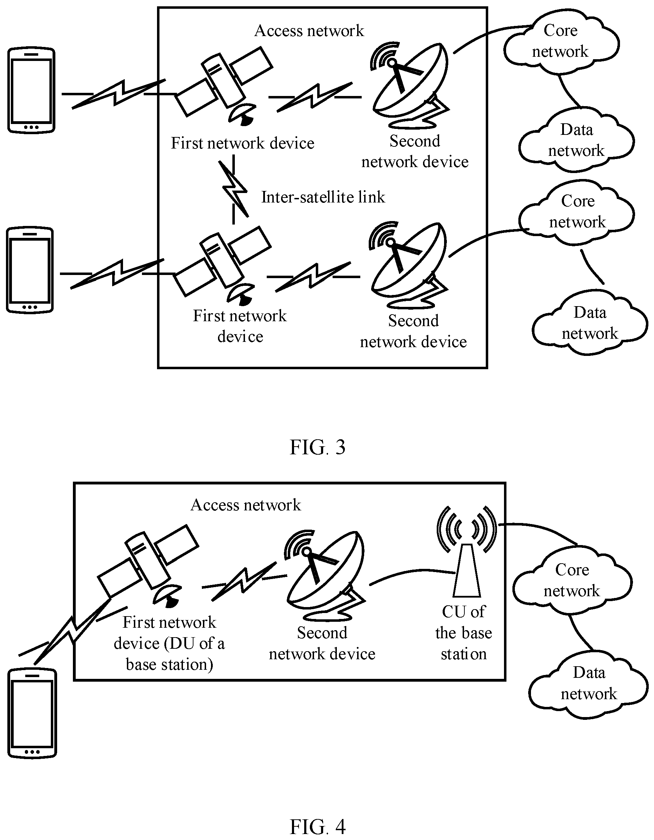

In an example, FIG. 3 is a diagram of another architecture 300 of an NTN network. In FIG. 3, an example in which two first network devices and two second network devices are included is used. Communication modes of the two first network devices are regenerative modes. To be specific, the two first network devices may serve as base stations for wireless communication. A difference from FIG. 2 lies in that there is an inter-satellite link (inter-satellite link, ISL) between the two first network devices. In this network architecture, different first network devices may communicate with each other, or may be connected to a same terrestrial core network.

In an example, the first network device may alternatively serve as a DU of a base station, and is separated from a CU of a terrestrial base station, to form a CU-DU distributed architecture.

FIG. 4 is a diagram of another architecture 400 of an NTN network. A difference between FIG. 4 and FIG. 1 lies in that, as a DU of a base station, a first network device may understand, process, and regenerate a signal from the ground instead of only performing transparent transmission or copying, and a terrestrial base station serves only as a CU. In this network architecture, a serving link between a terminal device and the first network device may be used for transmitting an NR-Uu radio interface signal, a feeder link between the first network device and a second network device is used for transmitting a satellite radio interface (satellite radio interface, SRI) signal, and an F1 interface signal between the DU and the CU is transmitted over the SRI signal.

With reference to the accompanying drawings, the following describes in detail a method for verifying a location of a terminal device provided in embodiments of this application. In the following description process, the method may be applied to any communication system shown in FIG. 1 to FIG. 4. In embodiments of this application, an access network device may verify the location of the terminal device, or a core network device may verify the location of the terminal device. The access network device may be, for example, the first network device and/or the terrestrial base station in FIG. 1 to FIG. 4. It should be noted that the communication systems shown in FIG. 1 to FIG. 4 are merely used as examples in embodiments of this application, and embodiments of this application are not limited to the scenarios.

For ease of understanding the technical solutions in embodiments of this application, the following describes terms in embodiments of this application.

### 1. Antenna port

The antenna port is a logical concept. One antenna port may correspond to one physical transmit antenna, or may correspond to a plurality of physical transmit antennas. In both the cases, a receiver (receiver) of a terminal does not decompose a signal from a same antenna port. This is because from a perspective of the terminal, regardless of whether a channel is formed by using a single physical transmit antenna or is formed by combining a plurality of physical transmit antennas, the antenna port is defined by a reference signal (reference signal, RS) corresponding to the antenna port. For example, an antenna port corresponding to a demodulation reference signal (demodulation reference signal, DMRS) is a DMRS port, and the terminal may obtain a channel estimation of the antenna port based on the reference signal. Each antenna port corresponds to one time-frequency resource grid (time-frequency resource grid), and has its own reference signal. One antenna port is one channel, and the terminal may perform channel estimation and data demodulation based on the reference signal corresponding to the antenna port.

### 2. Beam

The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using different beams.

Optionally, a plurality of beams having a same or similar communication characteristic may be considered as one beam. One beam may include one or more antenna ports, and is used to transmit a data channel, a control channel, a sounding signal, and the like. The one or more antenna ports forming the beam may be considered as one antenna port set.

The beam includes a transmit beam and a receive beam. The transmit beam may be distribution of signal strength formed in different directions in space after a signal is transmitted through an antenna, and the receive beam may be distribution in which an antenna array enhances or weakens reception of a radio signal in different directions in space.

In a current NR protocol, beam information may be indicated by using a quasi co-location (quasi co-location, QCL) relationship between antenna ports. Specifically, indication information (for example, downlink control information (downlink control information, DCI)) may indicate that there is a quasi co-location relationship between one resource (or antenna port) and another resource (or antenna port), to indicate that beams corresponding to the two resources (or antenna ports) have one or more same or similar spatial characteristics (or parameters), and a same receive beam may be used for receiving.

The beam may be specifically represented by identifiers of various signals in the protocol, for example, a resource index of a channel state information reference signal (channel state information reference signal, CSI-RS), an index of a synchronization signal/physical broadcast channel block (synchronization signal/physical broadcast channel block, SSB), a resource index of a sounding reference signal (sounding reference signal, SRS), and a resource index of a tracking reference signal (tracking reference signal, TRS).

In addition, generally, one beam corresponds to one DMRS port, one transmission configuration indicator (transmission configuration indicator, TCI), or one sounding reference signal resource indicator (SRS resource indicator, SRI) (used for uplink data transmission). Therefore, different beams may also be represented based on different DMRS ports, TCIs, or SRIs.

### 3. QCL

The QCL relationship indicates that beams (or resources) corresponding to a plurality of antenna ports have one or more same or similar communication characteristics. For a plurality of resources having a QCL relationship, a same or similar communication configuration may be used.

Specifically, antenna ports that have a QCL relationship have a same parameter, or a parameter (which may also be referred to as a QCL parameter) of an antenna port may be used to determine a parameter of another antenna port that has a QCL relationship with the antenna port; or two antenna ports have a same parameter, or a parameter difference between two antenna ports is less than a threshold. The parameter may include one or more of the following: a delay spread (delay spread), a Doppler spread (Doppler spread), a Doppler shift (Doppler shift), an average delay (average delay), an average gain, and a spatial receive parameter (spatial Rx parameter). The spatial receive parameter may include one or more of the following: an angle of arrival (angle of arrival, AOA), an average AOA, an AOA spread, an angle of departure (angle of departure, AOD), an average AOD, an AOD spread, a receive antenna spatial correlation parameter, a transmit antenna spatial correlation parameter, a transmit beam, a receive beam, and a resource indicator.

### 4. Transmission configuration indicator state (transmission configuration indicator state, TCI state)

The TCI state may indicate QCL information of a physical downlink control channel (physical downlink control channel, PDCCH)/physical downlink shared channel (physical downlink shared channel, PDSCH). Specifically, a higher layer signaling parameter PDSCH-config may configure a maximum of M TCI-states, to indicate reference signals that have a QCL relationship with a DMRS of the PDCCH/PDSCH. A value of M depends on a capability of a terminal. Each TCI-state defines one or more reference signals that have the QCL relationship with the DMRS of the PDSCH.

For example, in the TCI-state, a reference signal index may specifically indicate a reference signal that has the QCL relationship with the DMRS of the PDCCH/PDSCH.

It should be noted that a type of the TCI state is not limited in this embodiment of this application. For example, the TCI state may be a downlink (downlink, DL) TCI state, an uplink (uplink, UL) TCI state, or a joint TCI state (used simultaneously for uplink and downlink).

Currently, a network device usually configures a TCI state for each terminal device by using the terminal device as a granularity. In a subsequent communication process, when a quantity of TCI states configured by the network device for the terminal device is greater than 8, the network device first sends a media access control control element (media access control control element, MAC CE) to activate a maximum of eight TCI states, and then indicates, by using a "TCI-PresentInDCI" field (or an information element) in DCI, a TCI state finally used in a plurality of activated TCI states, and the terminal device may determine, based on the finally used TCI state, a beam for receiving the PDSCH. When the quantity of TCI states configured by the network device for the terminal device is less than or equal to 8, the network device directly indicates a used TCI state by using the "TCI-PresentInDCI" field in the DCI, and the terminal device may determine, based on the finally used TCI state, a beam for receiving the PDSCH. Alternatively, when the DCI does not carry the "TCI-PresentInDCI" field, the terminal device assumes that the PDSCH and the PDCCH meet a QCL relationship. In this case, the beam for receiving the PDSCH may be determined based on the beam for receiving the PDCCH.

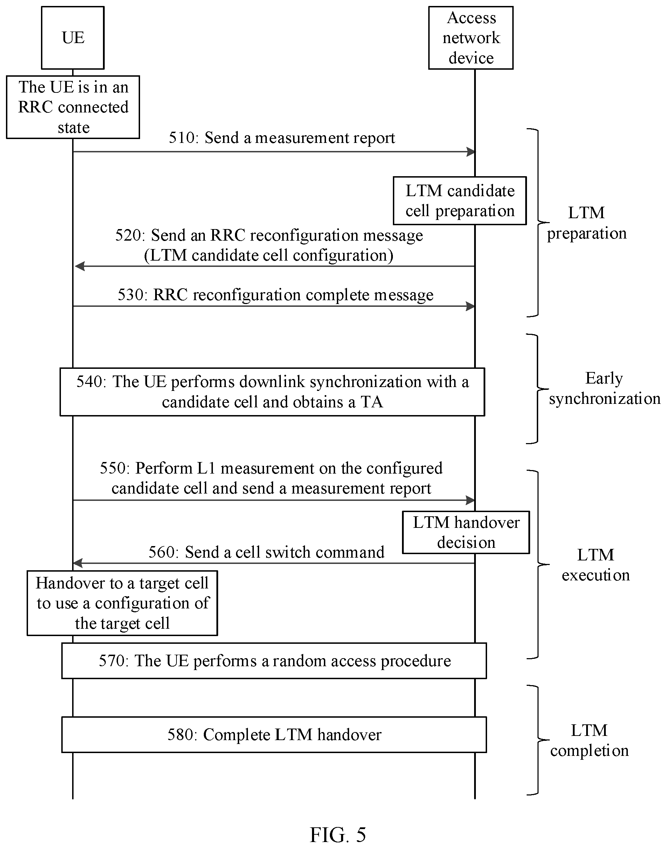

FIG. 5 is a schematic flowchart of performing cell handover by UE in the conventional technology. In a handover procedure shown in FIG. 5, layer 1/layer 2 triggered mobility (L1/L2 triggered mobility, LTM) handover is used as an example. This is not limited in this embodiment of this application.

In the LTM handover, an access network device changes a serving cell of the UE by using a cell switch command based on an L1 measurement report of the UE.

The specific procedure includes the following steps.

S510: The UE sends the measurement report to the access network device.

Correspondingly, the access network device receives the measurement report, determines, based on the measurement report, to perform LTM handover, and starts a candidate cell preparation operation.

S520: The access network device sends an RRC reconfiguration (RRC reconfiguration) message to the UE.

The RRC reconfiguration message includes an LTM candidate cell configuration of one or more candidate cells.

S530: The UE sends an RRC reconfiguration complete (RRC reconfiguration complete) message to the access network device.

The UE stores the LTM candidate cell configuration, and sends the RRC reconfiguration complete message to the access network device.

S540: The UE performs downlink synchronization with the candidate cell and obtains a TA.

Before receiving the cell switch command, the UE may perform downlink synchronization with the candidate cell and obtain the TA.

The UE may support performing downlink synchronization with the candidate cell by using an SSB before receiving the cell switch command (cell switch command, CSC). The CSC indicates the LTM candidate cell configuration that is pre-provided by the access network device to the UE by using RRC signaling.

The UE may support obtaining, before receiving the LTM CSC, a TA value of the candidate cell through random access (RACH) initiated by a PDCCH order, where the PDCCH order may be triggered only by a source cell.

S550: The UE performs L1 measurement on the configured candidate cell and sends a measurement report.

After performing L1 measurement, the UE sends the L1 layer measurement report to the access network device.

S560: The access network device sends the cell switch command to the UE, to trigger handover to a target cell.

The access network device decides to perform cell handover, and triggers cell handover by delivering MAC CE signaling that includes a candidate configuration index of the target cell. After receiving the switch command, the UE performs handover to a configuration of the target cell.

S570: The UE performs a random access procedure.

If random access needs to be performed for the cell handover, the UE performs the random access procedure to the target cell.

S580: The UE indicates that handover to the target cell is completed. The UE may repeat steps S540 to S570 based on the configuration provided in S520 to perform continuous LTM cell handover.

In this application, continuous LTM (that is, the UE does not release other LTM candidate cell configurations after LTM is triggered) between LTM candidate cell configurations may be performed when RRC reconfiguration is not required. This is not limited in this embodiment of this application.

LTM handover supports both intra-gNB-DU mobility and inter-gNB-DU mobility within a gNB-CU. The LTM further supports inter-frequency mobility, including mobility to an inter-frequency cell that is not a current serving cell. This is not limited in this embodiment of this application.

In an existing terrestrial network, when UE performs handover, a network side needs to deliver media access control control element (media access control control element, MAC CE) signaling to a terminal device (user equipment, UE), to indicate a resource set that needs to be activated at the UE, for example, a TCI state. The terminal device may determine, based on the TCI state, a beam for receiving a physical downlink shared channel (physical downlink shared channel, PDSCH). However, in an NTN scenario, because a satellite moves fast and handover is frequently performed, frequently delivering a TCI state that needs to be activated causes high signaling overheads, resulting in poor flexibility.

In view of this, embodiments of this application provide a communication method, to reduce signaling overheads caused by indicating a resource set in a frequent handover process of UE, thereby improving handover efficiency.

The following describes the solutions of this application in detail.

With reference to the accompanying drawings, the following describes in detail communication methods provided in embodiments of this application. Embodiments provided in this application may be applied to the communication system shown in FIG. 1 to FIG. 4. This is not limited.

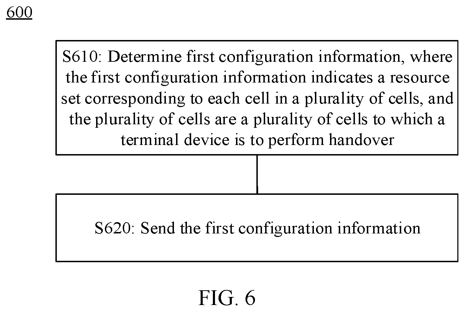

FIG. 6 is a schematic flowchart of a communication method according to an embodiment of this application. For ease of description, a method 600 is described below by using interaction whose execution bodies are a network device and a terminal device as an example. It may be understood that the terminal device may be a component (for example, a chip or a circuit) of the terminal device, or the network device may be a component (for example, a chip or a circuit) of the network device. This is not limited.

S610: The network device determines first configuration information.

The first configuration information indicates a resource set corresponding to each cell in a plurality of cells, and the plurality of cells are a plurality of cells to which the terminal device is to perform handover.

In an optional understanding, the first configuration information indicates a plurality of resource sets, and the plurality of resource sets are in a one-to-one correspondence with the plurality of cells to which the terminal device is to perform handover.

The resource set corresponding to each cell indicates a reference signal resource and/or a bandwidth used when the network device communicates with each cell.

In a possible implementation, the resource set corresponding to each cell includes one transmission configuration indicator state TCI state set and/or one bandwidth part BWP set.

One TCI state set includes at least one TCI state, and one BWP set includes at least one BWP.

It should be understood that, when performing candidate cell handover, the UE needs to activate one or more corresponding TCI states. The one or more TCI states may be referred to as a TCI state set, or may be referred to as a TCI state list (list), or may be indicated by using another term name that identifies the one or more TCI states. In this embodiment of this application, the TCI state set is used for description, but this is not limited.

Similarly, when performing candidate cell handover, the UE may perform communication based on one or more corresponding BWPs, and may determine a corresponding TCI state set. The one or more BWPs may be referred to as a BWP set, or may be referred to as a BWP list (list), or may be indicated by using another term name that identifies the one or more BWPs. In this embodiment of this application, the BWP set is used for description, but this is not limited.

In this application, the first configuration information indicates the resource set corresponding to each cell in the plurality of cells, and the following two implementations are used as examples for description.

In a possible implementation, the resource set corresponding to each cell includes one TCI state set.

In an optional understanding, each cell corresponds to one TCI state set, and a plurality of cells are in a one-to-one correspondence with a plurality of TCI state sets.

Each TCI state set is used by the UE to communicate with a network device in a corresponding cell. In other words, when performing handover to a candidate cell, the UE needs to activate a TCI state in a corresponding TCI state set.

A quantity of TCI states in each TCI state set in the plurality of TCI state sets may be the same or may be different. A quantity of TCI states in each TCI state set does not exceed a capability limitation of the UE. Each TCI state set includes at least one TCI state.

The quantity of TCI states in each TCI state set may be determined according to a standard. This is not limited in this embodiment of this application.

For example, the network device determines, based on information such as a moving track of a satellite, a moving status of the UE, and a cell range within satellite coverage, a TCI state set that needs to be activated when the UE performs handover to each candidate cell.

In this application, the TCI state sets may be represented in a form of a list, as shown in Table 1.

**Table 1**

| | | | |
|---|---|---|---|
| TCI state list 0 | TCI state list 1 | ... | TCI state list N-1 |
| TCI state ID 0,0 | TCI state ID 1,0 | ... | TCI state ID N-1,0 |
| TCI state ID 0,1 | TCI state ID 1,1 | ... | TCI state ID N-1,1 |
| ... | ... | ... | ... |
| TCI state ID 0,x | TCI state ID 1,x | ... | TCI state ID N-1,x |

As shown in Table 1, the TCI state list 0 to the TCI state list N-1 represent N TCI state sets, the N TCI state sets respectively correspond to N candidate cells, and each TCI state set may include x TCI states, where x may be an integer greater than or equal to 1. When performing handover to each candidate cell, the UE may activate a TCI state in the corresponding TCI state set to complete handover of the candidate cell.

It should be noted that the TCI state sets may alternatively be indicated in another form. This is not limited in this application.

In another possible implementation, the resource set corresponding to each cell includes one bandwidth part BWP set.

In an optional understanding, each cell corresponds to one BWP set, and a plurality of cells are in a one-to-one correspondence with a plurality of BWP sets.

Each BWP set indicates a bandwidth used when communication is performed in a corresponding cell, and the plurality of BWP sets are in a one-to-one correspondence with the plurality of cells.

Each BWP set includes at least one BWP.

It should be noted that there is a correspondence between the plurality of BWP sets and the plurality of TCI state sets, and a corresponding TCI state set may be determined based on a BWP set.

Specifically, a TCI state includes a BWP ID.

For example, a configuration of the TCI state may include the following signaling content:

```
          TCI-state::= SEQUENCE {
          tci-StateId TCI-Stateld,
          qcl-Type1 QCL-Info,
          qcl-Type2 QCL-Info OPTIONAL, -- Need R,
          ...,
          [[,
          additional PCI-r17 AdditionalPCIIndex-r17 OPTIONAL, -- Need R,
          pathlossReferenceRS-Id-r17 PathlossReferenceRS-r17 OPTIONAL, -- Cond
 JointTCI1,
          ul-powerControl-r17 Uplink-powerControlId-r17 OPTIONAL, -- Cond JointTCI,
          ]]
          }
          QCL-Info::= SEQUENCE {
          cell ServCellIndex OPTIONAL, -- Need R,
          bwp-Id BWP-Id OPTIONAL, -- Cond CSI-RS-Indicated,
          referenceSignal CHOICE {
          csi-rs NZP-CSI-RS-ResourceId,
          ssb SSB-Index,
          },
          qcl-Type ENUMERATED{typeA,typeB,typeC,typeD},
          ...,
          }.
```

It can be learned from the foregoing signaling content that QCL-info in the TCI state includes the BWP ID, and the UE may determine the TCI state set based on the BWP ID.

For example, the network device determines, based on information such as a moving track of a satellite, a moving status of the UE, and a cell range within satellite coverage, a bandwidth that needs to be used when the UE performs communication in each candidate cell.

In this application, the BWP set may be represented in a form of a list, as shown in Table 2.

**Table 2**

| | | | |
|---|---|---|---|
| BWP List 0 | BWP List 1 | ... | BWP List N-1 |
| BWP-ID 0,0 | BWP-ID 1,0 | ... | BWP-ID N-1, 0 |
| BWP-ID 0,1 | BWP-ID 1,1 | ... | BWP-ID N-1, 1 |
| ... | ... | ... | ... |
| BWP-ID 0,y | BWP-ID 1,y | | BWP-ID N-1,y |

As shown in Table 2, the BWP list 0 to the BWP list N-1 represent N BWP sets, the N BWP sets respectively correspond to N candidate cells, each BWP set may include y BWPs, and y may be an integer greater than or equal to 1. After performing handover to each candidate cell, the UE may perform communication based on a BWP in a corresponding BWP set.

It should be understood that Table 2 may be a downlink BWP set and/or an uplink BWP set. Alternatively, two lists may be respectively configured for the downlink BWP set and the uplink BWP set, and respectively correspond to uplink and downlink communication.

The BWP in Table 2 may be an initial uplink/downlink BWP (initial downlink/uplink bandwidth part, initial DL/UL BWP), or may be a UE-dedicated BWP (UE-dedicated BWP). This is not limited in this embodiment of this application.

In this application, a BWP ID or a BWP pair (bandwidth part pair, BWP pair) may be configured in the BWP set. This is not limited in this embodiment of this application.

The BWP pair includes an uplink UL BWP ID and a downlink DL BWP ID, and the UL BWP ID is the same as the DL BWP ID. The DL BWP and UL BWP have a same center frequency, but may have inconsistent bandwidths and subcarrier spacings.

It should be noted that the BWP sets may alternatively be indicated in another form. This is not limited in this application.

Optionally, the first indication information includes an index of a first beam, the first beam corresponds to a first resource set, and the first beam is used to perform uplink communication and/or downlink communication in a first cell.

It may be understood that each resource set may include an indication of a beam, and the indication of the beam indicates a beam that performs uplink communication and/or downlink communication in a cell corresponding to the resource set.

For example, the first beam may alternatively be indicated by using a TCI state identifier.

For example, it may be specified that the last TCI state or the first TCI state in each TCI state set is used as a beam indication.

For another example, a TCI state may not be used as the beam indication, and only a reference signal ID is included in a resource set (for example, a reference signal ID is added to each TCI state set). After receiving the set, the UE finds a corresponding TCI state based on a mapping relationship between reference signal IDs and TCI states, and activates the TCI state.

For another example, in a delivered resource set, the TCI state may not be used, but only a reference signal ID is added. After receiving the set, the UE finds a corresponding TCI state based on a mapping relationship between reference signal IDs and TCI states, and activates the TCI state.

S620: The network device sends the first configuration information to the terminal device.

First, a manner of sending the first configuration information is described in detail.

In a possible implementation, the network device may send the first configuration information to the terminal device by using radio resource control signaling.

For example, the network device may send the first configuration information by using separate RRC signaling.

For example, the network device may alternatively send the first configuration information by using RRC signaling that carries a candidate configuration of LTM, for example, step S520 in FIG. 5.

When the first configuration information is sent by using the RRC signaling that carries the candidate configuration of LTM, the first configuration information and the candidate configuration may be carried in the RRC message at the same time, or the first configuration information may be carried in the candidate configuration of LTM. This is not limited in this embodiment of this application.

The foregoing manner of sending the first configuration information is merely an example for description. This is not limited in this embodiment of this application.

Optionally, the network device may further send first indication information to the terminal device, where the first indication information indicates the first resource set.

The first resource set corresponds to the first cell, and the first cell is one of the plurality of cells.

It should be understood that the first cell may be understood as a current target cell, and the first resource set includes a reference signal resource and/or a bandwidth used for communication when the terminal device performs handover to the target cell.

It should be understood that the first resource set may include a first TCI state set.

In a possible implementation, the first indication information includes an index (index) of the first TCI state set.

In an optional understanding, the first indication information indicates the first TCI state set.

The first TCI state set is one of the plurality of TCI state sets, the first TCI state set corresponds to the first cell, and the first cell is a target cell to which the terminal device is to perform handover.

It may be understood that the network device sends the first configuration information to the terminal device, where the first configuration information indicates a resource set required when the terminal device performs handover to a plurality of successive cells. When indicating the terminal device to perform handover to the first cell (one of candidate cells), the network device may indicate the first resource set corresponding to the first cell. The first resource set may include the first TCI state set. Further, the index of the first TCI state set is indicated, so that the terminal device can perform handover to the first cell (the target cell) and activate a TCI state in the first TCI state set.

It should be further understood that the first resource set may include a first BWP set.

In another possible implementation, the first indication information includes an index of the first BWP set.

In an optional understanding, the first indication information indicates the first BWP set.

The first BWP set is one of the plurality of BWP sets, there is a mapping relationship between the first BWP set and a TCI state, the first BWP set corresponds to the first cell, and the first cell is the target cell to which the terminal device is to perform handover.

It may be understood that the network device sends the first configuration information to the terminal device, where the first configuration information indicates a resource set required when the terminal device performs handover to a plurality of successive cells. When indicating the terminal device to perform handover to the first cell (one of candidate cells), the network device may indicate the first resource set corresponding to the first cell. The first resource set may include the first BWP set. Further, the index of the first BWP set is indicated, so that the terminal device can perform handover to the first cell (the target cell) and activate a TCI state in the TCI state set corresponding to the first BWP set.

In another possible implementation, the first resource set indicated by the first indication information is a next resource set that is of a resource set corresponding to a current cell and that is in the plurality of resource sets.

In other words, the first resource set corresponds to the first cell. In this case, the first cell is a next cell to which the terminal device is to perform handover of the current access cell during handover based on a sequence of the plurality of cells. In other words, the first indication information indicates, based on the current cell handover sequence, that the resource set corresponding to the next cell to which the terminal device is to perform handover is the first resource set. In other words, the first resource set indicated by the first indication information is determined based on the cell handover sequence.

In an optional understanding, the terminal device may perform handover based on a sequence of the plurality of cells. In this case, the network device may indicate the terminal device to determine, based on a current handover sequence, a resource set (the first resource set) corresponding to a next target cell. In other words, the network device may determine a sequence of the plurality of resource sets, and the sequence of the plurality of resource sets corresponds to the handover sequence of the plurality of cells, so as to indicate to determine, based on the sequence of the plurality of resource sets, the resource set (the first resource set) corresponding to the next target cell.

In a possible implementation, the first resource set includes the first TCI state set, where the first indication information indicates to determine, based on the sequence of the plurality of TCI state sets, the first TCI state set; or the first resource set includes the first BWP set, where the first indication information indicates to determine, based on the sequence of the plurality of BWP sets, the first TCI state set.

In this case, the terminal device performs sequential handover, that is, performs handover to the plurality of cells based on a particular sequence.

For example, the network device may determine a sequence in which the terminal device performs handover to the plurality of cells, and determine, based on the handover sequence of the plurality of cells, a sequence of the plurality of resource sets respectively corresponding to the plurality of cells. The sequence of the plurality of resource sets is in a one-to-one correspondence with the handover sequence of the plurality of cells.

For example, a sequence of the plurality of TCI state sets and/or a sequence of the plurality of BWP sets are/is determined based on the handover sequence of the plurality of cells. The sequence of the plurality of TCI state sets is in a one-to-one correspondence with the handover sequence of the plurality of cells, and the sequence of the plurality of BWP sets is in a one-to-one correspondence with the handover sequence of the plurality of cells.

The network device may determine, based on the moving track of the satellite and the moving status (including a location, a moving speed, and a moving direction) of the UE, a sequence in which the UE performs cell handover for subsequent N times. The network device may alternatively determine the cell handover sequence of the UE in another manner. This is not limited in this embodiment of this application.

For example, the first indication information may be 1-bit information.

For example, when the UE does not perform sequential handover, the first indication information may be delivered to indicate a resource set corresponding to the UE.

For example, when the location of the UE moves, and the UE cannot perform handover based on a predetermined sequence, the first indication information may be delivered to indicate the resource set corresponding to the UE.

For example, when the moving speed of the UE is low or the UE does not move, and a sequence in which the UE performs handover to the target cell may be determined in advance, the plurality of resource sets may also be determined based on the sequence. The network device may alternatively deliver 1-bit information, to indicate whether the UE needs to activate a next resource set based on the sequence.

It should be understood that when the UE performs handover based on the predetermined sequence, the network device may not deliver 1-bit information or the index of the first TCI state set/the index of the first BWP set, and the terminal device directly determines the corresponding resource set based on the sequence.

It should be further understood that the first indication information further indicates the terminal device to perform handover to the first cell.

The following describes a manner of sending the first indication information by using an example.

A sending occasion of the first indication information may include but is not limited to the following:

The first indication information is sent before or after the network device receives the L1 measurement report; or
the first indication information is sent before or after the network device send a handover instruction; or
the first indication information is sent when the network device sends the handover instruction; or
the first indication information is sent when the first configuration information is sent.

The first indication information may be included in any one of the following: downlink control information, a media access control control element, radio resource control signaling, and the like.

For example, the network device may send the first indication information before or after step S550 (sending the measurement report) in FIG. 5, or may send the first indication information before step S560 (sending the switch command), or may send the first indication information in step S560, or may send the first indication information after step S560. This is not limited in this application.

When the first indication information is delivered before the network device sends the switch command (S560), the first indication information may be sent in the following cases. For example, after the network device triggers a PDCCH-order oriented to the target cell, and the UE sends a preamble to the target cell, the first indication information may be delivered to the UE together with a RAR of the target cell.

When the first indication information is delivered in the switch command (S560) sent by the network device, an index of the candidate configuration of the cell may also be bound to the first indication information. In this case, only the index of the candidate configuration of the target cell needs to be delivered in the switch command.

It should be understood that when the terminal device performs cell handover based on the cell handover sequence, the first indication information may be 1-bit information, and the 1-bit information may be sent in the switch command. In this case, the 1-bit information indicates the terminal device to perform handover to the next cell of the current cell based on the handover sequence. The switch command may include only the 1-bit indication information, and the switch command may not include the index of a candidate configuration of the target cell.

It should be noted that, the foregoing solution is applicable to activation or indication of a TCI state of a PDSCH/PUSCH/PUCCH/PDCCH/SRS. This is not limited in this application.

In a possible implementation, the network device may alternatively configure and deliver TCI state information in advance.

For example, the network device may configure tci-StatesToAddModList and/or tci-StatesToReleaseList and/or dl-OrJointTCI-StateList in each TCI state set.

In this application, this solution is also applicable to a conditional handover scenario.

The following describes the conditional handover scenario in detail.

In a possible implementation, the network device may further send at least one piece of first information to the terminal device, where each piece of first information in the at least one piece of first information indicates a handover condition of one cell in the plurality of cells.

For example, the first information corresponding to the first cell indicates a handover condition of the first cell. After the handover condition is met, a TCI state in the first TCI state set may be activated. Optionally, the terminal device may perform handover to the first cell.

The at least one piece of first information may be included in the first configuration information.

For example, the first information corresponding to the first cell and the first resource set may be configured in the first configuration information at the same time, or may be separately configured. This is not limited in this application.

For example, the network device may determine, based on the measurement result reported by the terminal device, the moving track of the satellite, and location information of the UE, the sequence in which the UE performs handover for subsequent N successive times, the handover condition, and the resource set corresponding to the UE in each candidate cell.

For example, the handover condition may include but is not limited to one or more of the following: information such as handover time information, handover location information, depression and elevation angle information, and remaining service time, and corresponding handover event threshold information.

It may be understood that the threshold information in the handover condition may include a threshold related to signal quality of a neighboring cell or a serving cell, and may further include other threshold information based on specific condition information, for example, may include any one or more of a threshold related to a distance between the UE and a cell, an angle range related to an elevation angle/depression angle between the UE and the satellite, and a threshold related to a remaining service time of a serving cell or a serving satellite.

In an implementation, when the handover condition is met, the UE applies the configuration of the target cell, and activates a TCI state in a corresponding TCI state set (TCI state list 0). Optionally, the UE may perform handover to the target cell.

For example, the handover condition includes time information. Specifically, each TCI state set in the plurality of TCI state sets corresponds to one handover time period.

In an implementation, when the UE enters a corresponding time period, a TCI state in a corresponding TCI state set is activated. Optionally, the UE may perform handover to the target cell.

For another example, the handover condition includes handover time information and threshold information. Specifically, each TCI state set in the plurality of TCI state sets corresponds to one handover time period and one threshold.

The threshold information includes a threshold related to signal quality of a neighboring cell or a serving cell.

In an implementation, when the UE enters a corresponding time period, the UE may start to measure a corresponding serving cell and neighboring cell. Further, when a preset event is met, a TCI state in a corresponding TCI state set is activated. Optionally, the UE may perform handover to the target cell. For example, a corresponding TCI state is activated when an A3 event is met, that is, signal quality of the neighboring cell is higher than signal quality of the serving cell; or a corresponding TCI state may be activated when an A4 condition is met, that is, signal quality of the neighboring cell is greater than a corresponding threshold; or a corresponding TCI state may be activated when an A5 condition is met, that is, signal quality of the serving cell is less than a threshold 1 and signal quality of the neighboring cell is greater than a threshold 2. This is not limited in this application.

In another implementation, when the handover condition is met, the UE starts to measure signal quality of the serving cell and the neighboring cell. Further, when a preset event is met, a TCI state in a corresponding TCI state set is activated. Optionally, the UE may perform handover to the target cell.

For example, the handover condition may further include location information and threshold information. Specifically, each TCI state set in the plurality of TCI state sets corresponds to one reference location and distance-related threshold 1 and threshold 2.

The threshold information may include a threshold related to a distance between the UE and the cell, and may further include a threshold related to signal quality.

When a distance between the UE and a reference location of the cell is greater than the threshold 1 and a distance between the UE and a conditionally configured candidate cell is less than the threshold 2, the UE may start to measure signals of the serving cell and the neighboring cell; or when a distance between the UE and a reference location of a primary cell (primary cell, Pcell) of a master cell group is greater than the threshold 1, the UE may start to measure signals of the serving cell and the neighboring cell; or when the distance between the UE and the conditionally configured candidate cell is less than the threshold 2, the UE may start to measure signals of the serving cell and the neighboring cell, and after measurement, determine, based on the threshold related to signal quality, whether an A3/A4/A5 event condition is met, to determine whether a TCI state in a corresponding TCI state set can be activated. Optionally, the UE may perform handover to the target cell. For specific determining, refer to the foregoing description. Details are not described again.

An elevation angle/depression angle and threshold information may also be used as the handover condition.

The threshold information may include an angle range related to an elevation angle/depression angle between the UE and the satellite, and may further include a threshold related to signal quality.

For example, when the elevation angle between the UE and the satellite on which the serving cell is located is less than a particular range, and/or the elevation angle between the UE and the satellite on which the target cell is located is greater than a particular range, the UE may start to measure signals of the serving cell and the neighboring cell, and after measurement, determine, based on the threshold related to signal quality, whether an A3/A4/A5 event condition is met, to determine whether a TCI state in a corresponding TCI state set can be activated. Optionally, the UE may perform handover to the target cell. For specific determining, refer to the foregoing description. Details are not described again.

A remaining service time and threshold information may also be used as the handover condition.

The threshold information may include a threshold related to the remaining service time of the serving cell or the serving satellite, and may further include the threshold related to signal quality.

For example, when the remaining service time of the serving cell for the UE is less than a particular threshold, the UE may start to measure signals of the serving cell and the neighboring cell; or when a remaining coverage time, of the satellite on which the serving cell is located, for the UE is less than a particular threshold, the UE may start to measure signals of the serving cell and the neighboring cell, and after measurement, determine, based on the threshold related to signal quality, whether an A3/A4/A5 event condition is met, to determine whether a TCI state in a corresponding TCI state set can be activated. Optionally, the UE may perform handover to the target cell. For specific determining, refer to the foregoing description. Details are not described again.

It should be understood that all the foregoing corresponding parameters may be configured in a resource set in advance. This is not limited in this application.

It should be understood that all parameters corresponding to the A3/A4/A5 event may be configured in the TCI state set in advance. For example, when the A5 event is used, two thresholds need to be configured, and a measurement result corresponding to the threshold may be an L1 measurement result, or may be an L3 measurement result. This is not limited in this application.

It should be understood that the foregoing A3/A4/A5 event is merely an example for description, and this embodiment of this application is not limited thereto.

Based on the foregoing technical solution, the network device may indicate, to the terminal device in advance, the resource set corresponding to the candidate cell. When performing continuous handover, the terminal device activates, based on the indication of the network device or a sequence, the resource set corresponding to the current candidate cell, to avoid signaling overheads caused by frequent indication of the resource set in a continuous handover scenario, thereby improving handover efficiency.

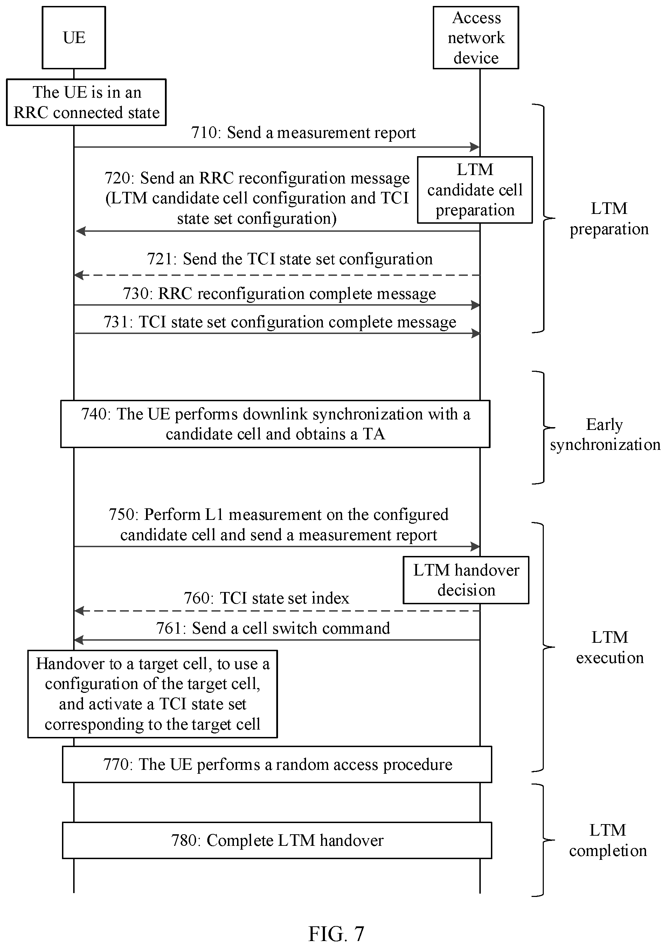

In the following solution, a specific handover procedure is described in detail by using a method 700 shown in FIG. 7 by using an example in which a TCI state set is configured in the first resource set.

FIG. 7 is a schematic flowchart of a communication method according to an embodiment of this application.

For ease of description, a method 700 is described below by using interaction whose execution bodies are an access network device and a terminal device as an example. It may be understood that the terminal device may be a component (for example, a chip or a circuit) of the terminal device, or the access network device may be a component (for example, a chip or a circuit) of the access network device. This is not limited.

S710: The UE sends a measurement report to the access network device.

Correspondingly, the access network receives the measurement report.

The measurement report may include user information (for example, a geographical location) of the UE, and the access network device may alternatively obtain user moving status information (including a location, a moving speed, a moving direction, and the like) in advance in another manner. This is not limited in this application.

S720: The access network device sends an RRC reconfiguration message to the UE.

The access network device decides, based on the measurement report, to start LTM handover, and may determine a candidate cell.

For example, the access network device may determine, based on a moving track of a satellite and a moving status (including the location, the moving speed, and the moving direction) of the UE, a sequence in which the UE performs cell handover for subsequent N times.

The RRC reconfiguration message includes an LTM candidate configuration of one or more candidate cells.

S721: The access network device sends a TCI state set configuration to the UE.

For example, the access network device may determine, based on information such as the moving track of the satellite, the moving status of the UE, and a cell range within satellite coverage, a TCI state that needs to be activated when the UE performs handover to each candidate cell, to form a plurality of TCI state sets, for example, Table 1 in the method 600.

Optionally, the access network device may send the TCI state set configuration by using an RRC message.

Optionally, the access network device may alternatively send the TCI state set configuration in step S720. For a specific manner, refer to the detailed description in the method 600. Details are not described again.

The access network device may send the TCI state set configuration to the UE in a plurality of manners. This is not limited in this application.

S730: The UE sends an RRC reconfiguration complete message to the access network device.

The UE stores the LTM candidate cell configuration, and sends the RRC reconfiguration complete message to the access network device.

S731: The UE sends a TCI state set configuration complete message to the access network device.

The UE stores the TCI state set configuration configured by the access network device, and sends the TCI state set configuration complete message to the access network device.

S740: The UE performs downlink synchronization with the candidate cell and obtains a TA.

For this step, refer to step S540 in the method 500. Details are not described again.

S750: The UE sends a measurement report to the access network device.

The UE performs L1 measurement on the configured candidate cell based on an L1 measurement configuration and sends the L1 measurement report.

S760: The access network device sends a TCI state list index to the UE.

The access network device decides, based on the L1 measurement report, to trigger LTM handover, and the access network device indicates the TCI state list index (TCI state list index) corresponding to a target cell to the UE.

In this embodiment, the TCI state list index is used as an example of first indication information.

For example, the access network device may send the TCI state list index to the UE by using DCI, RRC or MAC CE signaling.

It should be understood that this step is an optional step. In this step, the access network device may alternatively send 1-bit (bit) information to the UE, to indicate the UE to activate a TCI state in a next TCI state set based on a sequence of a plurality of TCI state sets. In the following embodiment, the TCI state list index is used as an example for description.

It should be noted that when the TCI state set is sent by using the RRC reconfiguration message, the TCI state list index may be carried in signaling content in the RRC reconfiguration message.

For example, the TCI state list index may be placed in LtmCellSwitchInfo, and the RRC reconfiguration message includes the following signaling content:

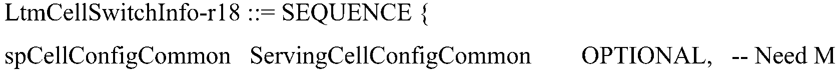

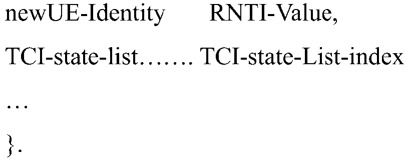

It should be understood that LtmCellSwitchInfo is carried in SpCellConfig, and SpCellConfig is carried in CellGroupConfig.

CellGroupConfig is used to configure a master cell group (master cell group, MCG) or a secondary cell group (secondary cell group, SCG). One cell group includes one MAC entity, a group of logical channels having associated RLC entities, a primary cell of the MCG or Spcell (special cell, spcell) of the SCG, and one or more secondary cells (secondary cell, scell), where spCellConfig in CellGroupConfig includes related parameters of Spcell in the cell group. LtmCellSwitchInfo in spCellConfig includes information required for the UE to perform an LTM target cell handover procedure.

In conclusion, when the cell is the LTM target cell, a corresponding TCI state may be activated directly based on the TCI state list index in LtmCellSwitchInfo.

For another example, the TCI state list index may be placed in LTM-Candidate, and the RRC reconfiguration message includes the following signaling content:

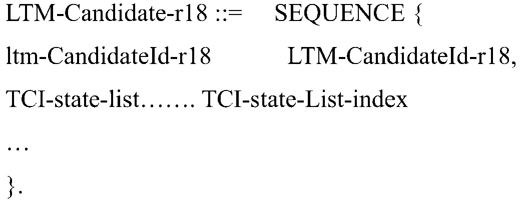

It should be understood that LTM-Candidate is carried in LTM-CandidateConfig.

LTM-CandidateConfig is used to provide the LTM candidate cell configuration, and LTM-Candidate includes LTM candidate cell configuration information. Therefore, when the cell is determined as the LTM target cell, the corresponding TCI state may be activated directly based on the TCI state list index in LTM-Candidate.

In this application, a corresponding TCI state list may alternatively be directly placed into the configuration of the corresponding candidate cell or target cell. In this case, the TCI state list index does not need to be used for indication.

S761: The access network device sends a cell switch command to the UE.

The access network device may send, in the MAC CE signaling, an index including the candidate configuration of the target cell, to trigger handover.

The UE performs handover to the target cell configuration and correspondingly activates the TCI state corresponding to the TCI state list index.

It should be understood that a sequence of step S760 and step S761 is not fixed. Alternatively, the switch command may be sent first, and then the TCI state list index is sent.

For example, the access network device may deliver the TCI state list index after receiving the L1 measurement report, or may deliver the TCI state list index before receiving the L1 measurement report, or may deliver the TCI state list index before sending the switch command, or may deliver the TCI state list index when the access network device sends the switch command, or may deliver the TCI state list index after the network side delivers the switch command. This is not limited in this application.

When the TCI state list index is delivered before the access network device sends the switch command, the TCI state list index may be sent in the following cases: For example, after the network side triggers a PDCCH-order oriented to the target cell, and the UE sends a preamble sequence preamble to the target cell, the TCI state list index may be delivered to the UE together with a RAR of the target cell.

When the TCI state list index is delivered in the switch command sent by the access network device, the index of the cell candidate configuration may alternatively be bound to the TCI state list index. In this case, only the index of the candidate configuration of the target cell needs to be delivered in the switch command.

Alternatively, the access network device may not deliver the TCI state list index or 1-bit information. After receiving the switch command, the UE directly activates the TCI state in the TCI state set corresponding to the target cell.

S770: The UE performs a random access process.

If cell handover needs to include performing the random access process, the UE performs the random access process to the target cell.

S780: The LTM handover is completed.

The UE indicates to the network side that handover is completed.

The UE may perform steps S740 to S780 for a plurality of times in subsequent LTM cell handover based on the configuration provided in step S720. In addition, after each handover is completed, the UE may delete a related configuration (including a corresponding TCI state set) about a source cell.

In this application, each TCI state set may be delivered in a differential manner, that is, a part different from a previous TCI state set or the first TCI state set (TCI state list 0) is delivered each time.

The following Table 3 shows a configuration of a TCI state set when N is equal to 4.

**Table 3**

| TCI state list 0 | TCI state list 1 | TCI state list 2 | TCI state list 3 |
|---|---|---|---|
| TCI state 4 | TCI state 1 | TCI state 10 | TCI state 28 |
| TCI state 6 | TCI state 6 | TCI state 24 | TCI state 62 |
| TCI state 20 | TCI state 20 | TCI state 33 | TCI state 70 |
| TCI state 64 | TCI state 40 | TCI state 60 | TCI state 81 |
| TCI state 70 | TCI state 55 | TCI state 77 | TCI state 82 |
| TCI state 88 | | TCI state 92 | TCI state 93 |
| TCI state 90 | | | TCI state 110 |
| TCI state 92 | | | TCI state 118 |

As shown in Table 3, the TCI state set is delivered in a differential manner. When the TCI state list 1 is delivered, it may indicate to deactivate the 1^{st}, 4^{th}, 5^{th}, 6^{th}, 7^{th}, and 8^{th} TCI states in the TCI state list 0, and add a TCI state 40, a TCI state 55 and a TCI state 1.

In this application, the TCI state set may alternatively be delivered to the UE together with an LTM candidate configuration of one or more candidate cells by using the RRC reconfiguration message RRCReconfiguration.

Based on the foregoing solution, the network device preconfigures the TCI state set that needs to be activated when the UE performs handover to the target cell during continuous handover, and the terminal device activates, based on the indication of the network device or a sequence, the TCI state set corresponding to the current candidate cell, to avoid signaling overheads caused by frequent indication of the TCI state in a continuous handover scenario, thereby improving handover efficiency.

The following describes, based on FIG. 7, a handover scenario in which a BWP set is configured in a first resource set. Some similar steps are not described in detail.

In this solution, in step S720 or S721, the access network device sends a plurality of BWP sets.

There is a correspondence between the plurality of BWP sets and the plurality of TCI state sets. A corresponding TCI state set may be determined based on a BWP set. For specific content of the BWP set, refer to content in FIG. 6 and Table 2. Details are not described again.

In step S760, the access network device sends a BWP index to the UE, to indicate to activate a TCI state set corresponding to a BWP set indicated by the BWP index; or the access network device sends 1-bit information to the UE, to indicate to activate the plurality of TCI state sets based on a sequence of the plurality of BWP sets.

Based on the foregoing solution, the network device preconfigures a BWP ID that may be used when the UE performs handover to the target cell during continuous handover, and the UE may determine, based on the BWP ID, a TCI state set or a TCI state corresponding to a current cell to which the UE is to perform handover, to avoid signaling overheads caused by frequent indication of the TCI state in a continuous handover scenario, thereby improving handover efficiency.

A conditional handover procedure based on a resource set preconfigured by the network device is detailed in detail in the following solution.

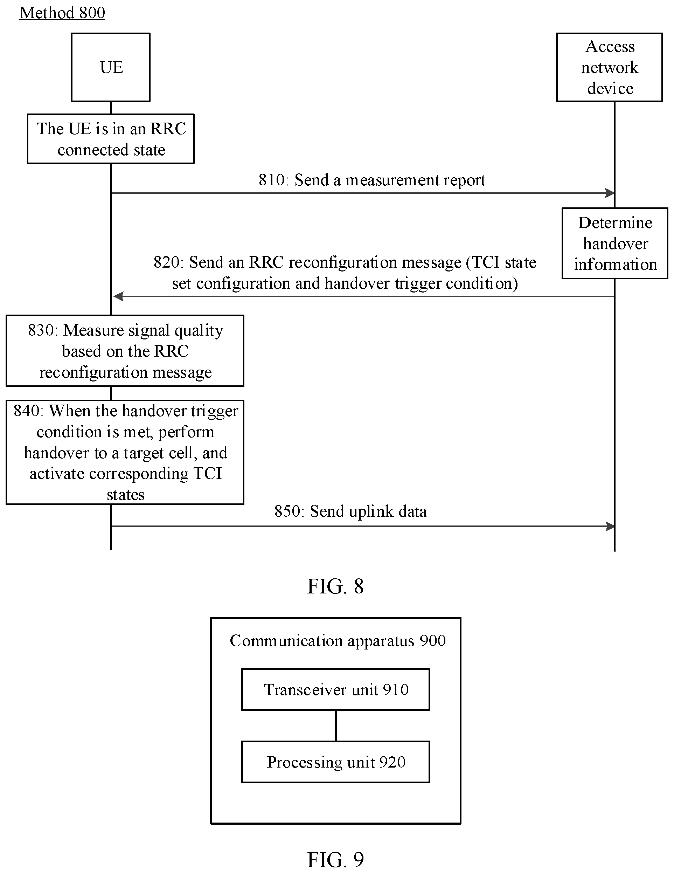

FIG. 8 is a schematic flowchart of a communication method according to an embodiment of this application.

For ease of description, a method 800 is described below by using interaction whose execution bodies are an access network device and a terminal device as an example. It may be understood that the terminal device may be a component (for example, a chip or a circuit) of the terminal device, or the access network device may be a component (for example, a chip or a circuit) of the access network device. This is not limited.

In this embodiment, conditional handover based on a preconfigured TCI state set in a resource set is used as an example. The solution in this embodiment is also applicable to a case in which the network device preconfigures a BWP set. Details are not described again.

S810: The UE sends a measurement report.

The measurement report may include user information (for example, a geographical location) of the UE, and the access network device may alternatively obtain user moving status information (including a location, a moving speed, a moving direction, and the like) in advance by using another step. This is not limited in this application.

S820: The access network device sends an RRC reconfiguration message to the UE.

Specifically, the access network device may determine handover information based on a measurement result, a moving track of a satellite, and location information of the UE.

The handover information may include a sequence in which the UE performs handover for subsequent N successive times, a handover condition, and a TCI state (TCI state set) to be activated by the UE in each candidate cell.

The access network device may send a plurality of TCI state sets and the handover condition (an example of first information) to the UE, for example, deliver the plurality of TCI state sets and the handover condition to the UE by using the RRC reconfiguration message, as shown in the following Table 4. In Table 4, an example in which the handover condition is a time period and a corresponding threshold is used for description.

**Table 4**

| Index | List 0 | List 1 | ... | List N-1 |
|---|---|---|---|---|
| Time duration | *T*_{0,*on*}, *T*_{0*,off*} | *T*₁*_{,on}, T*_{1*,off*} | ... | *T*_{*N-*1*,on*}, *T*_{*N-*1*,off*} |
| TCI state list | TCI state list 0 | TCI state list 1 | ... | TCI state list N-1 |
| Thresholds | *θ*₀ | *θ*₁ | ... | *θ*_{*N-*1} |

It should be noted that the TCI state list may alternatively be separately configured, and only a corresponding TCI state list index is placed in Table 4. This is not limited in this application.

S830: The UE performs measurement based on the RRC reconfiguration message.

After entering the time period [*T*₀*_{,on}, T*_{0*,off*}], the UE starts to measure signals of a serving cell and a neighboring cell.

S840: When the handover condition is met, perform handover to a target cell, and activate a TCI state in a corresponding TCI state set.

In a possible implementation, after entering a corresponding time period, the UE directly activates the TCI state in the corresponding TCI state set.

For example, after entering the time period [*T*_{0*,on*}, *T*_{0*,off*}], the UE activates the TCI state list 0; and after entering the time period [*T*_{1,*on*}, *T*_{1,*off*}], the UE activates a TCI state in the TCI state list 1.

In another possible implementation, the UE measures signals of the serving cell and the neighboring cell in a corresponding time period, and determines whether an A3/A4/A4 event is met. For example, when signal quality of the neighboring cell is higher than that of the serving cell and exceeds the threshold *θ*₀, the UE applies a configuration of the target cell, and activates the TCI state in the corresponding TCI state set (TCI state list 0).

S850: The UE sends uplink data to the access network device.

The UE sends the uplink data to the target cell to access the target cell.

Optionally, the UE may initiate random access to the target cell, to access the target cell.

Optionally, the foregoing steps S830 to S850 may be repeated to access a subsequent cell.

It should be understood that the handover condition may further include one or more of the following: location information, an elevation angle/depression angle, a remaining service time, corresponding threshold information, and the like. This is not limited in this application.

It may be understood that the threshold information in the handover condition may include a threshold related to signal quality of the neighboring cell or the serving cell, and may further include other threshold information based on specific condition information, for example, may include any one or more of a threshold related to a distance between the UE and a cell, an angle range related to an elevation angle/depression angle between the UE and the satellite, and a threshold related to a remaining service time of the serving cell or a serving satellite.

For example, location information-based conditional handover (conditional handover, CHO) may be used as the handover condition. For example, when a distance between the UE and a reference location of Pcell is greater than a threshold 1 and a distance between the UE and a conditionally configured candidate cell is less than a threshold 2, the UE may start to measure signals of the serving cell and the neighboring cell; or when the distance between the UE and the reference location of Pcell is greater than the threshold 1, or when the distance between the UE and the conditionally configured candidate cell is less than the threshold 2, the UE may start to measure signals of the serving cell and the neighboring cell, and after measurement, determine, based on the threshold related to signal quality, whether an A3/A4/A5 event condition is met, to determine whether to activate a TCI state in a corresponding TCI state set. For specific determining, refer to the foregoing description. Details are not described again.

For another example, an elevation angle/depression angle and corresponding threshold information may also be used as the handover condition. For example, when the elevation angle between the UE and the satellite on which the serving cell is located is less than a preset range, and/or the elevation angle between the UE and the satellite on which the target cell is located is greater than a preset range, the UE may start to measure signals of the serving cell and the neighboring cell, and after measurement, determine, based on the threshold related to signal quality, whether an A3/A4/A5 event condition is met, to determine whether to activate a TCI state in a corresponding TCI state set. For specific determining, refer to the foregoing description. Details are not described again.

For another example, the remaining service time may also be used as the handover condition. When the remaining service time of the serving cell for the UE is less than a preset threshold, the UE may start to measure signals of the serving cell and the neighboring cell; or when a remaining coverage time, of the satellite on which the serving cell is located, for the UE is less than a preset threshold, the UE may start to measure signals of the serving cell and the neighboring cell, and after measurement, determine, based on the threshold related to signal quality, whether an A3/A4/A5 event condition is met, to determine whether to activate a TCI state in a corresponding TCI state set. For specific determining, refer to the foregoing description. Details are not described again.

Based on the technical solution, when configuring, in advance, resource sets for the UE to perform conditional handover for N successive times, the access network device configures, for the UE, information such as a corresponding handover time period/location information/depression and elevation angles/remaining service time and a threshold corresponding to the handover condition together with the resource sets, so that the UE performs handover to the target cell by using the handover condition to activate a corresponding resource set, to avoid signaling overheads caused by frequent indication of a resource set in a conditional handover scenario, thereby improving handover efficiency.

It should be understood that another possible implementation of this embodiment of this application is similar to the method 600 to the method 800. For details, refer to the descriptions in the method 600 to the method 800. Details are not described herein again.

It should be understood that sequence numbers of the foregoing processes do not mean an execution sequence. The execution sequence of the processes should be determined based on functions and internal logic of the processes, and should not be construed as any limitation on implementation processes of embodiments of this application.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in actual implementation. The following is described by using an example in which each functional module is obtained through division based on each corresponding function.

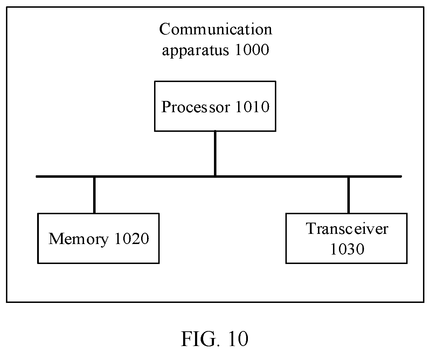

The foregoing describes, in detail with reference to FIG. 6 to FIG. 8, the methods provided in embodiments of this application. Apparatuses provided in embodiments of this application are described below in detail with reference to FIG. 9 and FIG. 10. It should be understood that descriptions of apparatus embodiments correspond to the descriptions of the method embodiments. Therefore, for content that is not described in detail, refer to the method embodiments. For brevity, details are not described herein again.

FIG. 9 is a diagram of a structure of a communication apparatus according to an embodiment of this application.

The apparatus 900 includes a transceiver unit 910 and a processing unit 920. The transceiver unit 910 may be configured to implement a corresponding communication function. The processing unit 920 may be configured to perform data processing.

Optionally, the transceiver unit 910 may also be referred to as a communication interface or a communication unit, and includes a sending unit and/or a receiving unit. The transceiver unit 910 may be a transceiver (including a transmitter and/or a receiver), an input/output interface (including an input interface and/or an output interface), a pin, a circuit, or the like. The transceiver unit 910 may be configured to perform a sending step and/or a receiving step in the foregoing method embodiments.

Optionally, the processing unit 920 may be a processor (may include one or more processors), a processing circuit having a processor function, or the like, and may be configured to perform a step other than sending and receiving in the foregoing method embodiments.

Optionally, the apparatus 900 further includes a storage unit. The storage unit may be a memory, an internal storage unit (for example, a register or a cache), an external storage unit (for example, a read-only memory or a random access memory), or the like. The storage unit is configured to store instructions. The processing unit 920 executes the instructions stored in the storage unit, so that the communication apparatus performs the foregoing methods.

In a design, the apparatus 900 may be configured to perform actions performed by the network device in the foregoing method embodiments. For example, the apparatus 900 may be configured to perform actions performed by the network device in the foregoing methods 600 to 800. In this case, the apparatus 900 may be a component of the network device. The transceiver unit 910 is configured to perform receiving and sending related operations on a network device side in the foregoing method embodiments, and the processing unit 920 is configured to perform processing related operations on the network device in the foregoing method embodiments.

For example, the processing unit 920 is configured to determine first configuration information, where the first configuration information indicates a resource set corresponding to each cell in a plurality of cells, and the plurality of cells are a plurality of cells to which a terminal device is to perform handover; and the transceiver unit 910 is configured to send the first configuration information.

Optionally, the transceiver unit 910 is further configured to send first indication information, where the first indication information indicates a first resource set, the first resource set corresponds to a first cell, and the first cell is one of the plurality of cells.

Optionally, the processing unit 920 is further configured to determine a sequence in which the terminal device performs handover to the plurality of cells; and the processing unit is further configured to determine, based on the handover sequence of the plurality of cells, a sequence of the plurality of resource sets respectively corresponding to the plurality of cells, where the sequence of the plurality of resource sets is in a one-to-one correspondence with the handover sequence of the plurality of cells.

Optionally, the transceiver unit 910 is further configured to send at least one piece of first information, where each piece of first information in the at least one piece of first information indicates a handover condition of one cell in the plurality of cells.

It should be understood that the transceiver unit 910 and the processing unit 920 may further perform other operations performed by the network device in any one of the methods 600 to 800. Details are not described herein again.

In a design, the apparatus 900 may be configured to perform actions performed by the terminal device in the foregoing method embodiments. For example, the apparatus 900 may be configured to perform actions performed by the terminal device in the foregoing methods 600 to 800. In this case, the apparatus 900 may be a component of the terminal device. The transceiver unit 910 is configured to perform receiving and sending-related operations on a terminal device side in the foregoing method embodiments, and the processing unit 920 is configured to perform processing-related operations on the terminal device side in the foregoing method embodiments.

For example, the transceiver unit 910 is configured to receive first configuration information; and the processing unit 920 is configured to determine, based on the first configuration information, a resource set corresponding to each cell in a plurality of cells, where the plurality of cells are a plurality of cells to which the terminal device is to perform handover.

Optionally, the transceiver unit 910 is further configured to receive first indication information; and the processing unit is further configured to determine a first resource set based on the first indication information, where the first resource set corresponds to a first cell, and the first cell is one of the plurality of cells.

Optionally, the processing unit 920 is further configured to perform handover to the first cell based on the first indication information.

Optionally, the transceiver unit 910 is further configured to receive at least one piece of first information, where each piece of first information in the at least one piece of first information indicates a handover condition of one cell in the plurality of cells.

It should be understood that the transceiver unit 910 and the processing unit 920 may further perform other operations performed by the terminal device in any one of the methods 600 to 800. Details are not described herein again.

It should be further understood that the apparatus 900 herein is embodied in a form of functional units. The term "unit" herein may mean an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the network device in the foregoing embodiments, and may be configured to perform procedures and/or steps corresponding to the network device in the foregoing method embodiments. To avoid repetition, details are not described herein again.

The apparatus 900 in the foregoing solutions has a function of implementing corresponding steps performed by the device in the foregoing methods, or the apparatus 900 in the foregoing solutions has a function of implementing corresponding steps performed by the network device in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform receiving/sending operations and related processing operations in the method embodiments.

In addition, the transceiver unit 910 may alternatively be a transceiver circuit (for example, may include a receiving circuit and a sending circuit), and the processing unit may be a processing circuit.

It should be noted that the apparatus in FIG. 9 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 is a diagram of a communication architecture according to an embodiment of this application. A communication apparatus 1000 shown in FIG. 10 includes a processor 1010, a memory 1020, and a transceiver 1030. The processor 1010 is coupled to the memory 1020, and is configured to execute instructions stored in the memory 1020, to control the transceiver 1030 to send a signal and/or receive a signal.

It should be understood that the processor 1010 and the memory 1020 may be combined into one processing apparatus. The processor 1010 is configured to execute program code stored in the memory 1020, to implement the foregoing functions. During specific implementation, the memory 1020 may alternatively be integrated into the processor 1010, or may be independent of the processor 1010. It should be understood that the processor 1010 may alternatively correspond to each processing unit in the foregoing communication apparatus, and the transceiver 1030 may correspond to each receiving unit and sending unit in the foregoing communication apparatus.

It should be further understood that the transceiver 1030 may include a receiver (which is also referred to as a receiving machine) and a transmitter (which is also referred to as a transmitting machine). The transceiver may further include an antenna, and there may be one or more antennas. The transceiver may alternatively be a communication interface or an interface circuit.

Specifically, the communication apparatus 1000 may correspond to the terminal device in the method 600 to the method 800 according to embodiments of this application. The communication apparatus 1000 may include units configured to perform the methods performed by the network device in the method 600 to the method 800. It should be understood that a specific process in which the units perform the foregoing corresponding steps is described in detail in the foregoing method embodiments, and for brevity, details are not described herein.

When the communication apparatus 1000 is a chip, the chip includes an interface unit and a processing unit. The interface unit may be an input/output circuit or a communication interface. The processing unit may be a processor, a microprocessor, or an integrated circuit integrated on the chip.

In an implementation process, the steps in the foregoing methods may be completed by using an integrated logic circuit of hardware in the processor or instructions in a form of software. The steps of the methods disclosed with reference to embodiments of this application may be directly performed by a hardware processor, or may be performed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, the steps in the foregoing method embodiments may be completed by using an integrated logic circuit of hardware in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logic block diagrams disclosed in embodiments of this application may be implemented or executed. The general-purpose processor may be a microprocessor, or the processor may be any conventional processor or the like. The steps of the methods disclosed with reference to embodiments of this application may be directly performed by a hardware decoding processor, or may be performed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

This application further provides a computer-readable medium storing a computer program. When the computer program is executed by a computer, a function of any one of the foregoing method embodiments is implemented.

This application further provides a computer program product. When the computer program product is executed by a computer, a function of any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium accessible by the computer, or a data storage device, for example, a server or a data center, integrating one or more available media. The available medium may be a magnetic medium (such as a floppy disk, a hard disk, or a magnetic tape), an optical medium (such as a high-density digital video disc (digital video disc, DVD)), a semiconductor medium (such as a solid state disk (solid state disk, SSD)) or the like.

In embodiments of this application, the terms such as "example" or "for example" are used for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that the "embodiments" mentioned throughout the specification means that particular features, structures, or characteristics related to the embodiments are included in at least one embodiment of this application. Therefore, the embodiments throughout the specification may not necessarily refer to the same embodiment. In addition, the specific features, structures, or properties may be combined in one or more embodiments in any proper manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that the names of the nodes and the messages are limited in this application. On the contrary, any name that has a function that is the same as or similar to that of the node or the message used in this application is considered as a method or an equivalent replacement in this application, and falls within the protection scope of this application.

It should be further understood that in this application, "when" and "if" both mean that the UE or the base station performs corresponding processing in an objective situation, which is not limited in time, and does not require an action that needs to be determined when the UE or the base station implements the processing, and does not mean that there is another limitation.

In addition, the terms "system" and "network" in this specification may be usually used interchangeably in this specification. The term "and/or" in this specification describes only an association relationship between associated objects, and indicates that three relationships may exist. For example, A and/or B may represent: Only A exists, both A and B exist, and only B exists.

The term "at least one of..." or "at least one type of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" means one or more. "A plurality of" indicates two or more.

It should be understood that, in embodiments of this application, terms "include", "comprise", "have", and their variants all mean "include but are not limited to", unless otherwise specifically emphasized in another manner.

It should be understood that, in various embodiments of this application, first, second, and various numeric numbers are merely used for differentiation for ease of description, and are not intended to limit the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the above-described apparatus embodiment is merely an example. For example, the division of the units is only a logical function division and may be other divisions during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computing device (which may be a personal computer, a server, a network device, or the like) to perform all or some of the steps of the methods described in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely particular implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a network device, and comprising:
determining first configuration information, wherein the first configuration information indicates a resource set corresponding to each cell in a plurality of cells, and the plurality of cells are a plurality of cells to which a terminal device is to perform handover; and
sending the first configuration information.

2. The method according to claim 1, wherein the resource set corresponding to each cell indicates a reference signal resource and/or a bandwidth used when the network device communicates with each cell.

3. The method according to claim 2, wherein the resource set corresponding to each cell comprises one transmission configuration indicator state TCI state set and/or one bandwidth part BWP set, the TCI state set comprises at least one TCI state, and the BWP set comprises at least one BWP.

4. The method according to any one of claims 1 to 3, wherein the method further comprises:
sending first indication information, wherein the first indication information indicates a first resource set, the first resource set corresponds to a first cell, and the first cell is one of the plurality of cells.

5. The method according to claim 4, wherein the first indication information comprises an index of the first resource set.

6. The method according to claim 5, wherein
the first indication information comprises an index of a first TCI state set, and the first TCI state set corresponds to the first resource set; or
the first indication information comprises an index of a first BWP set, and the first BWP set corresponds to the first resource set; or
the first indication information comprises an index of a first beam, the first beam corresponds to the first resource set, and the first beam is used to perform uplink communication and/or downlink communication in the first cell.

7. The method according to any one of claims 1 to 4, wherein the method further comprises:
determining a sequence in which the terminal device performs handover to the plurality of cells; and
determining, based on the handover sequence of the plurality of cells, a sequence of the plurality of resource sets respectively corresponding to the plurality of cells, wherein the sequence of the plurality of resource sets is in a one-to-one correspondence with the handover sequence of the plurality of cells.

8. The method according to claim 7, wherein the plurality of resource sets comprise the first resource set, and the first resource set is a next resource set that is of a resource set corresponding to a current cell and that is in the plurality of resource sets.

9. The method according to claim 8, wherein the first indication information is 1-bit information.

10. The method according to any one of claims 1 to 9, wherein the first indication information further indicates the terminal device to perform handover to the first cell.

11. The method according to any one of claims 1 to 10, wherein the method further comprises:
sending at least one piece of first information, wherein each piece of first information in the at least one piece of first information indicates a handover condition of one cell in the plurality of cells.

12. The method according to claim 11, wherein the at least one piece of first information is comprised in the first configuration information.

13. A communication method, applied to a terminal device, and comprising:
receiving first configuration information; and
determining, based on the first configuration information, a resource set corresponding to each cell in a plurality of cells, wherein the plurality of cells are a plurality of cells to which the terminal device is to perform handover.

14. The method according to claim 13, wherein the resource set corresponding to each cell indicates a reference signal resource and a bandwidth used when a network device communicates with each cell.

15. The method according to claim 14, wherein the resource set corresponding to each cell comprises one transmission configuration indicator state TCI state set and/or one bandwidth part BWP set, the TCI state set comprises at least one TCI state, and the BWP set comprises at least one BWP.

16. The method according to any one of claims 13 to 15, wherein the method further comprises:
receiving first indication information; and
determining a first resource set based on the first indication information, wherein the first resource set corresponds to a first cell, and the first cell is one of the plurality of cells.

17. The method according to claim 16, wherein the first indication information comprises an index of the first resource set.

18. The method according to claim 17, wherein
the first indication information comprises an index of a first TCI state set, and the first TCI state set corresponds to the first resource set; or
the first indication information comprises an index of a first BWP set, and the first BWP set corresponds to the first resource set; or
the first indication information comprises an index of a first beam, the first beam corresponds to the first resource set, and the first beam is used to perform uplink communication and/or downlink communication in the first cell.

19. The method according to any one of claims 13 to 16, wherein the first resource set is a next resource set that is of a resource set corresponding to a current cell and that is in the plurality of resource sets.

20. The method according to claim 19, wherein the first indication information is 1-bit information.

21. The method according to any one of claims 13 to 20, wherein the method further comprises:
performing handover to the first cell based on the first indication information.

22. The method according to any one of claims 13 to 21, wherein the method further comprises:
receiving at least one piece of first information, wherein each piece of first information in the at least one piece of first information indicates a handover condition of one cell in the plurality of cells.

23. The method according to claim 22, wherein the at least one piece of first information is comprised in the first configuration information.

24. A communication apparatus, comprising:
a processing unit, configured to determine first configuration information, wherein the first configuration information indicates a resource set corresponding to each cell in a plurality of cells, and the plurality of cells are a plurality of cells to which a terminal device is to perform handover; and a transceiver unit, configured to send the first configuration information.

25. The communication apparatus according to claim 24, wherein
the resource set corresponding to each cell indicates a reference signal resource and/or a bandwidth used when the network device communicates with each cell.

26. The communication apparatus according to claim 25, wherein the resource set corresponding to each cell comprises one transmission configuration indicator state TCI state set and/or one bandwidth part BWP set, the TCI state set comprises at least one TCI state, and the BWP set comprises at least one BWP.

27. The communication apparatus according to any one of claims 24 to 26, wherein the sending unit is further configured to send first indication information, wherein the first indication information indicates a first resource set, the first resource set corresponds to a first cell, and the first cell is one of the plurality of cells.

28. The communication apparatus according to claim 27, wherein the first indication information comprises an index of the first resource set.

29. The communication apparatus according to claim 28, wherein
the first indication information comprises an index of a first TCI state set, and the first TCI state set corresponds to the first resource set; or
the first indication information comprises an index of a first BWP set, and the first BWP set corresponds to the first resource set; or
the first indication information comprises an index of a first beam, the first beam corresponds to the first resource set, and the first beam is used to perform uplink communication and/or downlink communication in the first cell.

30. The communication apparatus according to any one of claims 24 to 27, wherein the processing unit is further configured to determine a sequence in which the terminal device performs handover to the plurality of cells; and the processing unit is further configured to determine, based on the handover sequence of the plurality of cells, a sequence of the plurality of resource sets respectively corresponding to the plurality of cells, wherein the sequence of the plurality of resource sets is in a one-to-one correspondence with the handover sequence of the plurality of cells.

31. The communication apparatus according to claim 30, wherein the plurality of resource sets comprise the first resource set, and the first resource set is a next resource set that is of a resource set corresponding to a current cell and that is in the plurality of resource sets.

32. The communication apparatus according to claim 31, wherein the first indication information is 1-bit information.

33. The communication apparatus according to any one of claims 24 to 32, wherein the first indication information further indicates the terminal device to perform handover to the first cell.

34. The communication apparatus according to any one of claims 24 to 33, wherein the transceiver unit is further configured to send at least one piece of first information, wherein each piece of first information in the at least one piece of first information indicates a handover condition of one cell in the plurality of cells.

35. The communication apparatus according to claim 34, wherein the at least one piece of first information is comprised in the first configuration information.

36. A communication apparatus, comprising:
a transceiver unit, configured to receive first configuration information; and a processing unit, configured to determine, based on the first configuration information, a resource set corresponding to each cell in a plurality of cells, wherein the plurality of cells are a plurality of cells to which the terminal device is to perform handover.

37. The communication apparatus according to claim 36, wherein
the resource set corresponding to each cell indicates a reference signal resource and a bandwidth used when a network device communicates with each cell.

38. The communication apparatus according to claim 37, wherein the resource set corresponding to each cell comprises one transmission configuration indicator state TCI state set and/or one bandwidth part BWP set, the TCI state set comprises at least one TCI state, and the BWP set comprises at least one BWP.

39. The communication apparatus according to any one of claims 36 to 38, wherein the transceiver unit is further configured to receive first indication information; and the processing unit is further configured to determine a first resource set based on the first indication information, wherein the first resource set corresponds to a first cell, and the first cell is one of the plurality of cells.

40. The communication apparatus according to claim 39, wherein the first indication information comprises an index of the first resource set.

41. The communication apparatus according to claim 40, wherein
the first indication information comprises an index of a first TCI state set, and the first TCI state set corresponds to the first resource set; or
the first indication information comprises an index of a first BWP set, and the first BWP set corresponds to the first resource set; or
the first indication information comprises an index of a first beam, the first beam corresponds to the first resource set, and the first beam is used to perform uplink communication and/or downlink communication in the first cell.

42. The communication apparatus according to any one of claims 36 to 39, wherein the first resource set is a next resource set that is of a resource set corresponding to a current cell and that is in the plurality of resource sets.

43. The communication apparatus according to claim 42, wherein the first indication information is 1-bit information.

44. The communication apparatus according to any one of claims 36 to 43, wherein the processing unit is further configured to perform handover to the first cell based on the first indication information.

45. The communication apparatus according to any one of claims 36 to 44, wherein the transceiver unit is further configured to receive at least one piece of first information, wherein each piece of first information in the at least one piece of first information indicates a handover condition of one cell in the plurality of cells.

46. The communication apparatus according to claim 45, wherein the at least one piece of first information is comprised in the first configuration information.

47. A communication apparatus, comprising units configured to perform the method according to any one of claims 1 to 12 or 13 to 23.

48. A communication apparatus, comprising a processor, wherein the processor is coupled to a memory, the memory is configured to store a computer program or instructions, and the processor is configured to execute the computer program or the instructions in the memory, so that the apparatus performs the method according to any one of claims 1 to 12, or performs the method according to any one of claims 13 to 23.

49. A computer-readable storage medium, wherein the computer-readable storage medium stores a computer program or instructions, and when the computer program or the instructions are run on a computer, the computer is enabled to perform the method according to any one of claims 1 to 12 or the method according to any one of claims 13 to 23.

50. A chip system, comprising a processor, configured to invoke a computer program from a memory and run the computer program, so that a communication device on which the chip system is installed performs the method according to any one of claims 1 to 12, or performs the method according to any one of claims 13 to 23.

51. A computer program product, wherein when the computer program product is run on a computer, the computer is enabled to perform steps of the method according to any one of claims 1 to 12, or perform steps of the method according to any one of claims 13 to 23.
